# EUROPEAN PATENT SPECIFICATION

(11) **EP 2 979 401 B1**
(45) Date of publication and mention of the grant of the patent: **31.07.2019**
(21) Application number: 14794107.4
(22) Date of filing: 07.05.2014
(51) Int. Cl.: H04L 12/28, H04L 9/32, H04W 12/06, H04W 12/08, H04L 29/06, H04W 48/14, H04W 12/02, H04W 84/12

(54) **SYSTEM AND METHOD FOR INDICATING A SERVICE SET IDENTIFIER**
SYSTEM UND VERFAHREN ZUR ANZEIGE EINES SERVICE-SET-IDENTIFIKATORS
SYSTÈME ET PROCÉDÉ D'INDICATION D'UN IDENTIFIANT DE RÉSEAU SANS FIL

(30) Priority: 07.05.2013 US 201361820228 P
(43) Date of publication of application: 03.02.2016
(73) Proprietor: Huawei Technologies Co., Ltd., Longgang District Shenzhen, Guangdong 518129 (CN)
(72) Inventor: YANG, Yunsong, San Diego, California 92130 (US); KWON, Young Hoon, San Diego, California 92129 (US); RONG, Zhigang, San Diego, California 92129 (US)
(74) Representative: Epping - Hermann - Fischer
(86) International application number: PCT/US2014/037182
(87) International publication number: WO 2014/182836

(56) References cited:
- WO-A1-2009/134288
- WO-A1-2013/033361
- WO-A1-2013/033361
- CA-A1- 2 840 873
- KR-A- 20040 049 533
- US-A1- 2005 147 073
- US-A1- 2007 026 856
- US-A1- 2008 109 880
- US-A1- 2008 109 880
- US-A1- 2009 274 094
- US-A1- 2012 082 144
- US-A1- 2012 314 696
- US-A1- 2013 021 949
- US-A1- 2013 021 949

## Description

### FIELD OF THE INVENTION

The present disclosure relates generally to digital communications, and more particularly to a system and method for indicating a service set identifier (SSID).

### BACKGROUND OF THE INVENTION

A wireless LAN (WLAN) or Wi-Fi (wireless-fidelity) communication system may include an access point (AP) and one or more stations (STAs), which the AP serves. An AP may also be referred as a communications controller, base station, access node, and the like. A STA may also be referred as a client device, device, terminal, mobile station, user equipment, and the like. Today, typical examples of WLAN STAs may be found in laptops, smart-phones, tablets, sensors, and so on.

US 20080109880 A1 discloses a method utilized in a wireless local area network (WLAN) system. The WLAN system includes a station and an access point (AP). The method includes steps of: transmitting an input value to the station by the AP; utilizing the input value to calculate an initial service set identifier (SSID) and an initial key by the station; and utilizing the initial SSID and the initial key to perform an authentication procedure by the station and the AP.

US 20130021949 A1 discloses a method wherein information related to a set of networks from a first node to a second node of a communication system can be distributed. A set of identifiers which belong to the set of networks can be stored at the first node. Hash values are generated at the first node for the identifiers in the set of identifiers using a hash function. The generated hash values are transmitted from the first node to the second node. The second node determines an identifier of a particular network available for communicating with the second node. The second node generates a hash value for the identifier using the hash function. The second node compares the hash value of the identifier with the hash values received at the second node from the first node to determine whether the particular network belongs to said set of networks. WO 2013/033361 discloses a method for wireless communication. The method includes sending a modulation and coding scheme request to an access point. The modulation and coding scheme request is sent using a first physical layer preamble frame. The modulation and coding scheme request includes an identifier associated with the access point. The method further includes receiving at a station a modulation and coding scheme feedback response from the access point in response to sending the modulation and coding scheme request. The modulation and coding scheme feedback response is received as a second physical layer preamble frame. In addition, the method includes determining a modulation and coding scheme based on the modulation and coding scheme feedback response. Moreover, the method includes transmitting data to the access point using the identified modulation and coding scheme.

Document KR20040049533 by LG Electronics Inc. dicloses a method for an authentication service in a wireless LAN which keeps an SSID secret by encryption.

### SUMMARY OF THE INVENTION

The invention is defined in the claims. In the following, parts of the description and drawings referring to embodiments which are not covered by the claims are not presented as embodiments of the invention, but as examples useful for understanding the invention. Example embodiments of the present disclosure which provide a system and method for indicating a service set identifier (SSID).

In accordance with an example embodiment of the present disclosure, a method for securing communications between an access point and a station is provided. The method includes generating, by the station, a first hashed service set identifier (SSID) by applying a first hash function to a first SSID known by the station, transmitting, by the station, a first message to the access point, wherein the first message includes the first hashed SSID, and receiving, by the station, a second message from the access point, wherein the second message includes a second hashed SSID generated by the access point by applying a second hash function to a second SSID associated with the access point. The method also includes generating, by the station, a third hashed SSID by applying the second hash function to the first SSID, determining, by the station, if the third hashed SSID matches the second hashed SSID, and and transmitting, by the station, a third message to the access point if the third hashed SSID matches the second hashed SSID.

In accordance with another example embodiment of the present disclosure, a method for securing communications between an access point and a station is provided. The method receiving, by the station, a first message from the access point, wherein the first message includes a first hashed service set identifier (SSID) generated by applying a first hash function to a first SSID associated with the access point, and generating, by the station, a second hashed SSID by applying the first hash function to a second SSID known by the station. The method also includes determining, by the station, if the second hashed SSID matches the first hashed SSID, and transmitting, by the station, a second message to the access point if the second hashed SSID matches the first hashed SSID.

In accordance with another example embodiment of the present disclosure, a method for securing communications between an access point and a station is provided. The method includes generating, by the access point, a first hashed service set identifier (SSID) by applying a first hash function to a first SSID associated with the access point, and transmitting, by the access point, a Beacon frame to the station, wherein the Beacon frame includes the first hashed SSID. The method also includes receiving, by the access point, a first message from the station, and transmitting, by the access point, a second message to the station, wherein the second message is responsive to the first message.

In accordance with another example embodiment of the present disclosure, a station is provided. The station includes a processor, a transmitter operatively coupled to the processor, and a receiver operatively coupled to the processor. The processor generates a first hashed service set identifier (SSID) by applying a first hash function to a first SSID known by the station, generates a third hashed SSID by applying a second hash function to the first SSID, and determines if the third hashed SSID matches a second hashed SSID generated by an access point by applying the second hash function to a second SSID associated with the access point. The transmitter transmits a first message to the access point, wherein the first message includes the first hashed SSID, and transmits a third message to the access point if the third hashed SSID matches the second hashed SSID. The receiver receives a second message from the access point, wherein the second message includes the second hashed SSID.

In accordance with another example embodiment of the present disclosure, an access point is provided. The access point includes a processor, a transmitter operatively coupled to the processor, and a receiver operatively coupled to the processor. The processor generates a first hashed service set identifier (SSID) by applying a first hash function to a first SSID associated with the access point. The transmitter transmits a Beacon frame to a station, wherein the Beacon frame includes the first hashed SSID, and transmits a second message to the station, wherein the second message is responsive to a first message from the station. The receiver receives the first message.

In accordance with another example embodiment of the present disclosure, a communications system is provided. The communications system includes an access point, and a station operatively coupled to the access point. The access point serves stations operating within a coverage area. The station generates a first hashed service set identifier (SSID) by applying a first hash function to a first SSID known by the station, transmits a first message to the access point, wherein the first message includes the first hashed SSID, receives a second message from the access point, wherein the second message includes a second hashed SSID generated by the access point by applying a second hash function to a second SSID associated with the access point, generates a third hashed SSID by applying the second hash function to the first SSID, determines if the third hashed SSID matches the second hashed SSID, and transmits a third message to the access point if the third hashed SSID matches the second hashed SSID. One advantage of an embodiment is that the SSID of an AP is kept hidden from hackers, thereby possibly preventing a variety of hack attacks on the AP and STAs served by the AP.

A further advantage of an embodiment is that the privacy of end users of STAs served by an AP utilizing the example embodiments disclosed herein is preserved. The maintenance of the privacy of the end users may help prevent the tracking of the end users, the inference of relationships between the end users, and the like.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example communications system according to example embodiments described herein;
Figure 2 illustrates an example diagram illustrating messages exchanged between communicating devices as a station connects with an access point;
Figures 3a and 3b illustrate example hashed SSID generators according to example embodiments described herein;
Figures 4a and 4b illustrate example hashed SSID generators that generate legacy SSID IE compliant hashed SSIDs according to example embodiments described herein;
Figure 5a illustrates a first example hashed SSID IE according to example embodiments described herein;
Figure 5b illustrates a second example hashed SSID IE according to example embodiments described herein;
Figures 5c and 5d illustrate example legacy SSID IEs with legacy SSID field support for hashed SSIDs according to example embodiments described herein;
Figure 6 illustrates a message exchange diagram of example messages exchanged between a STA and an AP as the STA connects with the AP according to example embodiments described herein;
Figure 7a illustrates a flow diagram of example operations occurring in a STA as the STA connects to an AP using a passive scanning procedure according to example embodiments described herein;
Figure 7b illustrates a flow diagram of example operations occurring in an AP as a STA connects to the AP using a passive scanning procedure according to example embodiments described herein;
Figure 8a illustrates a flow diagram of example operations occurring in a STA as the STA connects to an AP using a combination of passive and active scanning procedures according to example embodiments described herein;
Figure 8b illustrates a flow diagram of example operations occurring in an AP as a STA connects to the AP using a combination of passive and active scanning procedures according to example embodiments described herein;
Figure 9a illustrates a flow diagram of example operations occurring in a STA as the STA connects to an AP using an active scanning procedure according to example embodiments described herein;
Figure 9b illustrates a flow diagram of example operations occurring in an AP as a STA connects to the AP using an active scanning procedure according to example embodiments described herein;
Figure 10 illustrates a message exchange diagram of example messages exchanged between a STA, an AP, and a legacy AP as the STA connects with the AP according to example embodiments described herein; and
Figure 11 illustrates an example communications device according to example embodiments described herein.

### DETAILED DESCRIPTION OF THE EMBODIMENTS

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the disclosure and ways to operate the disclosure, and do not limit the scope of the disclosure.

One embodiment of the disclosure relates to indicating SSIDs. For example, a station generates a first hashed service set identifier (SSID) by applying a first hash function to a first SSID known by the station, transmits a first message to an access point, wherein the first message includes the first hashed SSID, and receives a second message from the access point, wherein the second message includes a second hashed SSID generated by the access point by applying a second hash function to a second SSID associated with the access point. The station also generates a third hashed SSID by applying the second hash function to the first SSID, determines if the third hashed SSID matches the second hashed SSID, and transmits a third message to the access point if the third hashed SSID matches the second hashed SSID.

The present disclosure will be described with respect to example embodiments in a specific context, namely communications systems that use an identifier of a communications controller to facilitate control operations such as scanning, association, reassociation, authentication, and the like. The disclosure may be applied to standards compliant communications systems, such as those that are compliant with Third Generation Partnership Project (3GPP), IEEE 802.11, and the like, technical standards, and non-standards compliant communications systems, that use identifiers of communications controllers to facilitate control operations.

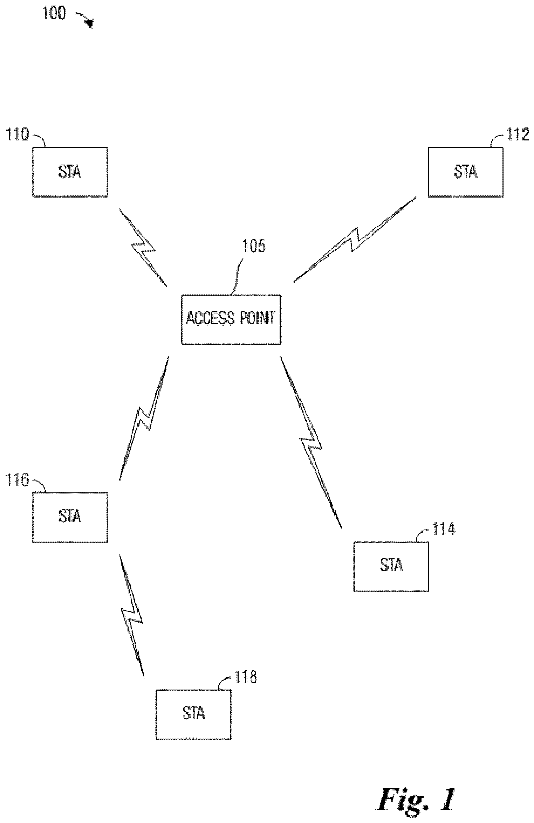

Figure 1 illustrates an example communications system 100. Communications system 100 includes an access point (AP) 105 that serves one or more stations, such as stations (STA) 110 - 116, by receiving communications originating from the stations and then forwarding the communications to their intended destinations or receiving communications destined to the stations and then forwarding the communications to their intended stations. In addition to communicating through AP 105, some stations may directly communicate with one another. As an illustrative example, station 116 may transmit directly to station 118. APs may also be commonly referred to as NodeBs, evolved NodeBs (eNBs), base stations, controllers, communications controllers, and the like. Stations may also be commonly referred to as mobile stations, mobiles, user equipment (UE), terminals, users, subscribers, and the like.

While it is understood that communications systems may employ multiple APs capable of communicating with a number of stations, only one AP, and a number of stations are illustrated for simplicity.

APs are configured with a service set identifier (SSID) for a variety of purposes, including WLAN discovery. An AP may broadcast its SSID in Beacon frames to announce its presence. A client device (or STA) may display received SSIDs to show an available WLAN list to an end user. As a result, for example, the end user may choose to add an AP to a preferred WLAN list. Afterwards, the client device may automatically search for the preferred AP(s) using the corresponding SSID(s). In addition to Beacon frames, SSIDs may be present in management frames such as Probe Requests, Probe Responses, Association Requests, and Reassociation Requests. In some embodiments, the SSID may be required to be present in one or more of the management frames (e.g., Association Request and Reassociation Request frames) for the association and/or re-association (or other action) to proceed.

SSIDs are traditionally transmitted over the air in plain text form, and consequently have been viewed as an open invitation to hackers or attackers. One existing solution is to "hide" the SSID by giving out a null SSID in the Beacon or refusing to answer a Probe Request if the SSID in the Probe Request doesn't specifically match with the SSID of the access point (AP). However, this manner of hiding the SSID may be ineffective as there are other ways to obtain the SSID when it is in plain text form, e.g., by passively monitoring the wireless medium for a legitimate client device that is trying to actively scan or associate with the AP, or by actively sending a faked Deauthentication frame to an already connected legitimate client device and then monitoring its Reassociation Request, and the like.

Additionally, there is the issue of user privacy, as the SSIDs of a STA's preferred WLANs, which may be sent in the Probe Request, Association Request, or Reassociation Request frames, together with the media access control (MAC) address of the STA, which is generally included in the transmitter address (TA) field in these frames, can be used for tracking user location, inferring a user's personal lifestyle (e.g. by the entertainment places visited) or health condition (e.g. by the medical doctor's office visited), or social relationship between users (e.g. by a shared WLAN of a business office or school), and the like. Accordingly, systems and methods for addressing the security and privacy issues are desired.

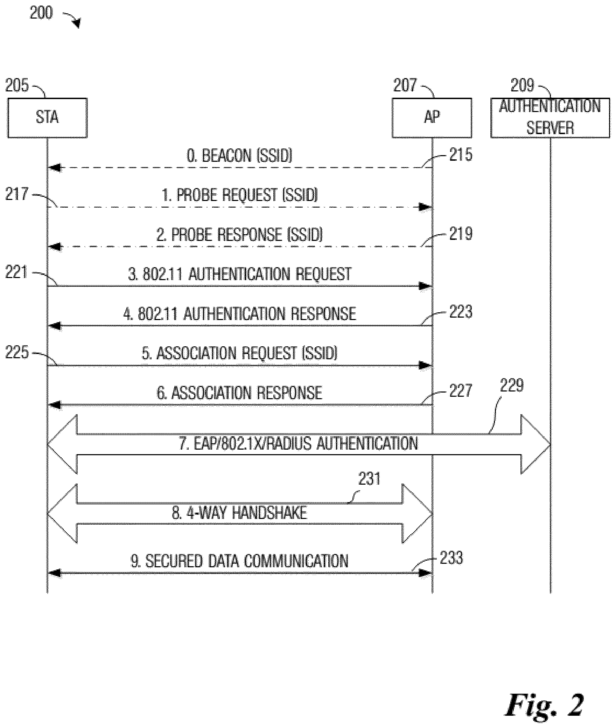

Figure 2 illustrates a diagram 200 illustrating messages exchanged between communicating devices as a station connects with an access point. Diagram 200 highlights messages exchanged between a STA 205, an AP 207, and an authentication server 209. STA 205 may discover AP 207 via passive scanning (e.g., when STA 205 receives a beacon frame transmitted by AP 207 (shown as event 215)) or active scanning (e.g., when STA 205 sends a probe request frame (shown as event 217) and receives a corresponding probe response frame (shown as event 219)). Through passive scanning or active scanning, STA 205 may be able to obtain sufficient information about AP 207 to determine that it can associate with AP 207. As an example, STA 205 may be able to obtain a service set identifier (SSID) of AP 207.

After deciding to associate with AP 207, STA 205 may first initiate an IEEE 802.11 open system authentication procedure by sending an authentication request frame (shown as event 221) and receiving a corresponding authentication response frame (shown as event 223) from AP 207. Then, STA 205 may initiate an IEEE 802.11 association procedure by sending an association request frame (shown as event 225) and receiving a corresponding association response frame (shown as event 227) from AP 207. It is noted that the association request frame includes the SSID of AP 207. In general, the authentication and association procedures exchange robust security network (RSN) parameters between STA 205 and AP 207.

STA 205 and authentication server 209 may perform an extensible authentication protocol (EAP)/IEEE 802.1X/Radius authentication procedure (shown as event 229) to supplement the IEEE 802.11 open system authentication with mutual authentication. Additionally, STA 205 and AP 207 may perform a four-way handshake (shown as event 231) to ensure that STA 205 can trust AP 207 and allow the two to share their keys along with the indication of the pair-wise master key (PMK). STA 205 and AP 207 may then be able to conduct secured communications (shown as event 233).

According to an example embodiment, the above mentioned security and/or privacy concerns may be addressed by using an identifier for an AP that is generated from the SSID of the AP so that the SSID is not transmitted over the wireless fidelity (Wi-Fi) air interface in plain text form. The SSID (in plain text form) may be pre-installed on legitimate client devices by secured means, e.g., manual user input via a setup menu on the client device, using the Wi-Fi Protected Setup (WPS) procedure, using an out-of-band channel such as a cellular connection or a near field communications (NFC) link as a part of an authorization process, and the like. The identifier may be used by legitimate client devices to recognize or to indicate its preferred WLAN, while a hacker or unauthorized client device is not able to derive the SSID from the identifier.

As discussed previously, conventional solutions that address security and/or privacy issues generally involve the establishment of a shared encryption key between the client device (e.g., STA) and the AP before transmitting the encrypted SSID (i.e., the identifier) over the air. Such solutions may require significant change to existing standardized procedures and incur additional delay due to the steps involved in the establishment of the shared encryption key prior to the attachment of the client device to the AP.

The systems and methods presented herein provide increased SSID security and/or privacy, as well as end user privacy (such as location, interests, and the like), thereby making it more costly for a hacker to impersonate a legitimate AP or STA, while maintaining backward compatibility so that legacy STAs and/or APs do not operate improperly when the identifier (e.g., the encrypted SSID) is used in place of the unsecured SSID.

As discussed above, hiding SSIDs may be ineffective (from a security standpoint) because there are other ways to obtain the SSID. As an example, hackers may passively monitor the wireless medium for a legitimate client device trying to actively scan or associate with an AP. With a hidden SSID in the beacon, the legitimate client devices are forced to perform active scanning, e.g., client devices send out probe requests containing the SSID of the AP they wish to join and listen for a probe response containing the same SSID. In both occasions, the SSID is in plain text form. Additionally, hackers may fake a de-authenticate message to an already connected legitimate client device and then monitor its re-association requests (active), which contain the SSID of the AP in plain text form. The probe request, which is transmitted far more frequently than the association request and re-association request, can be a good source for a hacker to obtain the SSIDs. On the other hand, a hacker can use the de-authentication trick to force a re-association request, with a more predictable delay.

According to an example embodiment, an identifier is generated from the SSID of an AP and used in place of the SSID so that the SSID is not transmitted over the Wi-Fi air interface (i.e., the wireless medium) in plain text form. In some example embodiments, an SSID (in the form of the identifier) may be communicated using a cryptographically hashed SSID instead of the plain text SSID. As an illustrative example, the cryptographically hashed SSID may be generated using a hash function, such as a SHA-256 function, and the like. The output of the hash function may be further truncated to a fixed and shorter length.

In some example embodiments, the SSID may be modified by a string or value prior to being hashed. As an illustrative example, a timestamp that is provided in a beacon frame or a probe response frame (in a TimeStamp field) may be used to modify the SSID before hashing so that hackers will not receive the same hashed SSID twice, as it takes more than 580000 years before the 64-bit Timestamp repeats itself. The use of the timestamp to modify the SSID will make it more costly for a hacker to try to impersonate a legitimate AP. The SSID may also be modified by the type of frame that is used to carry the hashed SSID.. Further, the SSID may be modified by a random number (such as a nonce) or sequence number generated by the STA or AP, or by an identifier (e.g. MAC address) of the STA or AP. As an STA never includes the Timestamp in any frame that the STA sends out, the STA may use a nonce in generating the hashed SSID to avoid sending out a static hashed SSID and the STA may provide the nonce value to the AP. Then, if the AP stores the nonce values that have been recently used by legitimate STAs, the AP may refuse to respond to a request frame that uses a same nonce value that has been recently used. In this way, the use of a nonce to modify the SSID can help to make it more costly for a hacker to try to impersonate the legitimate STA.

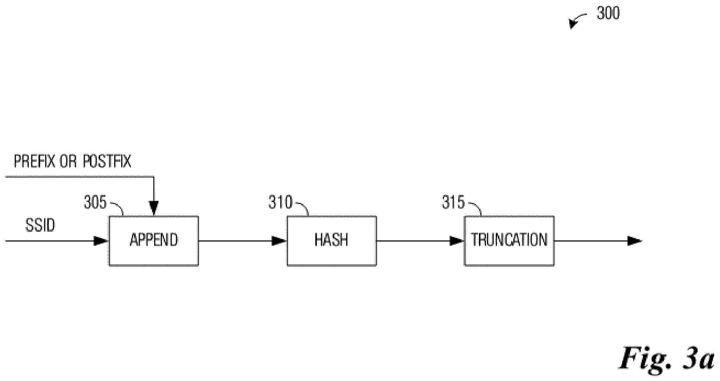

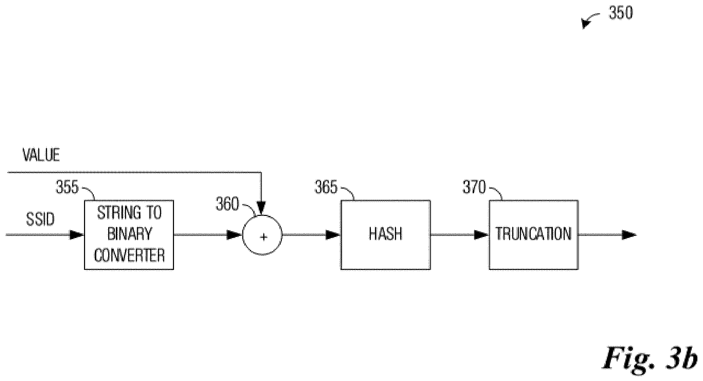

Figure 3a illustrates a first example hashed SSID generator 300. Hashed SSID generator 300 may include an append unit 305 that appends a string expression of a frame type, timestamp, nonce, MAC address, or a combination thereof, and appends it as a prefix or a postfix to an SSID (which may be in plain text form). A hashing unit 310 may perform a hashing on a given input (as provided by append unit 305) based on a cryptographic hash function, such as the SHA-256 hash function, and the like. A truncation unit 315 may truncate a hash output (as provided by hashing unit 310) to a specified length, providing a shorter and fixed length for lower overhead and simpler design of an information element (IE) that carries the hashed SSID. Figure 3b illustrates a second example hashed SSID generator 350. Hashed SSID generator 350 may include a string to binary converter 355 that converts a plain text string, such as the SSID in plain text form, into a numerical value (which may be represented in binary form). It should be noted that binary numbers and a String to Binary Converter are only used here as an example and using other numeral systems with different bases are also possible. An adder 360 may combine the numerical value produced by string to binary converter 355 and a value that is a numerical value pre-defined for a frame type, a timestamp, a nonce, a MAC address, a combination thereof, and the like, to produce a sum of the two numerical values. A hashing unit 365 may perform a hashing on a given input (as provided by adder 360) based on a cryptographic hash function, such as the SHA-256 hash function, and the like. A truncation unit 370 may truncate a hash output (as provided by hashing unit 365) to a specified length, providing a shorter and fixed length for lower overhead and simpler design of an information element (IE) that carries the hashed SSID.

It may be advantageous to reuse the legacy SSID IE to maintain compatibility with legacy APs and/or STAs while providing the enhanced security and privacy afforded through the use of hashed SSIDs. The hashed SSID, as produced by example hashed SSID generators 300 and 350, is generally an unintelligible sequence of bits. So, it is highly unlikely that the hashed SSID will match with any SSID that is in the plain text form.

According to an example embodiment, the SSID field of the SSID IE contains the hashed SSID and the Length field of the SSID IE indicates the specified length of the hashed SSID (after the truncation). A hashed SSID capable AP or STA, when receiving an SSID IE with the Length field set to a value that is equal to the specified length of the hashed SSID, blindly checks to determine if any hashed SSIDs of its SSIDs matches with the content of the SSID field of the received SSID IE. Additionally, if any plain-text SSID of the AP or stored at the STA happens to have a length equal to the specified length of the hashed SSID (e.g., indicated in the Length field of the received SSID IE) and if the configuration of the AP or the STA allows it to check unprotected SSID (i.e., a plain-text SSID), the hashed SSID capable AP or STA may also check to determine if that plain-text SSID matches with the content of the SSID field of the received SSID IE. If there is a match, then it is determined that the associated SSIDs match. While if the Length field of the received SSID IE is set to a value that is not equal to the specified length of the hashed SSID, a hashed SSID capable AP or STA treats the received SSID IE as a conventional SSID IE, which carries an SSID in the plain text form. Then if the configuration of the AP or the STA allows it to check unprotected SSID, the hashed SSID capable AP or STA checks if any of its plain-text SSIDs matches with the content of the SSID field of the received SSID IE. A legacy AP or legacy STA uses an SSID in the plain-text form to perform matching with the content of the SSID field of the received SSID IE, even though the SSID IE may be reused by a hashed SSID capable AP or STA to carry a hashed SSID. However, as mentioned before, the hashed SSID, as produced by example hashed SSID generators 300 and 350, is generally an unintelligible sequence of bits. So, it is highly unlikely that the hashed SSID will match with any SSID that is in the plain text form. Therefore, in this example embodiment of reusing the legacy SSID IE, the specified length value contained in the Length field of the SSID IE serves as an indicator of possible presence of hashed SSID in the SSID field of the SSID IE. However, a recipient of the SSID IE doesn't know for sure that a hashed SSID is carried since some plain-text SSID may happen to have the same length as the hashed SSID. According to another example embodiment, a pre-defined value, a pre-defined string, a pre-defined sequence, and the like, may be combined (such as appended, inserted, interleaved, and the like) with the hashed SSID, and the combined string or sequence is contained in the SSID field of the SSID IE. The length of the combined string or sequence is also a specified value, since the lengths of both parts are pre-defined. Therefore, the pre-defined value, string, or sequence included in a pre-defined portion of the SSID field, together with the specified length value (of the combined string) contained in the Length field, serves as an indicator to the hashed SSID capable APs and STAs that a remainder of the SSID field of the SSID IE contains a hashed SSID. A hashed SSID capable AP or STA receiving a SSID IE with a Length field set to the specified length value knows that the remainder of the SSID field holds a hashed SSID, if it is able to find in a pre-defined portion of the SSID field a pre-defined value, a pre-defined string, a pre-defined sequence, and the like.

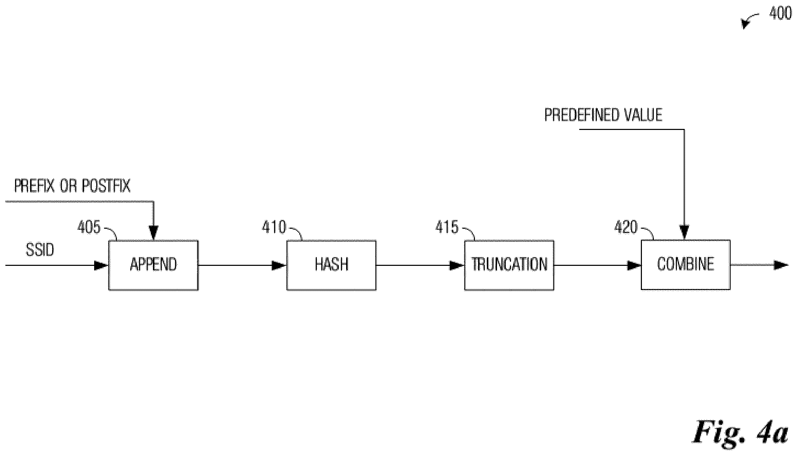

Figure 4a illustrates a first example hashed SSID generator 400 that generates a legacy SSID IE compliant hashed SSID. Hashed SSID generator 400 may include an append unit 405 that appends a string expression of a frame type, timestamp, MAC address, or a combination thereof, and appends it as a prefix or a postfix to a SSID (which may be in plain text form). A hashing unit 410 may perform a hashing on a given input (as provided by append unit 405) based on a cryptographic hash function, such as the SHA-256 hash function, and the like. A truncation unit 415 may truncate a hash output (as provided by hashing unit 410) to a specified length. A combine unit 420 may combine (such as append, insert, interleave, and the like) the truncated hashed SSID (as provided by truncation unit 415) with a pre-defined value (or a pre-defined string, a pre-defined sequence, and the like).

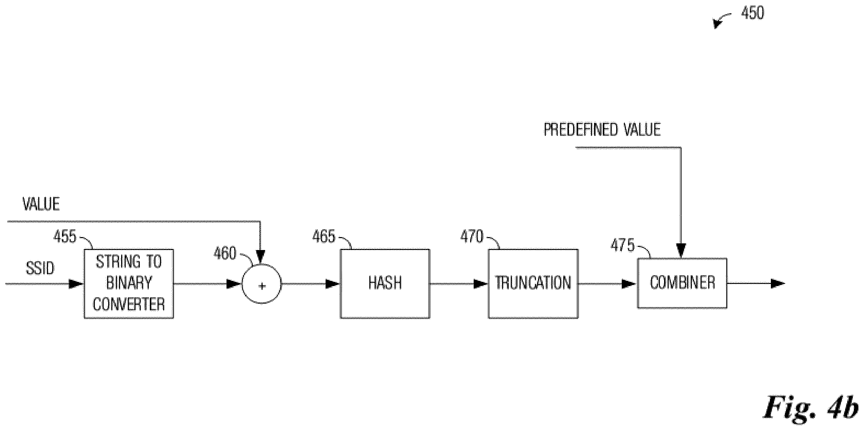

Figure 4b illustrates a second example hashed SSID generator 450 that generates a legacy SSID IE compliant hashed SSID. Hashed SSID generator 450 may include a string to binary converter 455 that converts a plain text string, such as the SSID in plain text form, into a numerical value (which may be represented in binary form). It should be noted that binary numbers and a String to Binary Converter are only used here as an example and using other numeral systems with different bases are also possible. An adder 460 may combine the numerical value produced by string to binary converter 455 and a value that is a numerical value pre-defined for a frame type, a timestamp, a nonce, a MAC address, a combination thereof, and the like, to produce a sum of the two numerical values. A hashing unit 465 may perform a hashing on a given input (as provided by adder 460) based on a cryptographic hash function, such as the SHA-256 hash function, and the like. A truncation unit 470 may truncate a hash output (as provided by hashing unit 465) to a specified length. A combine unit 475 may combine the truncated hashed SSID (as provided by truncation unit 470) with a pre-defined value (or a pre-defined string, a pre-defined sequence, and the like).

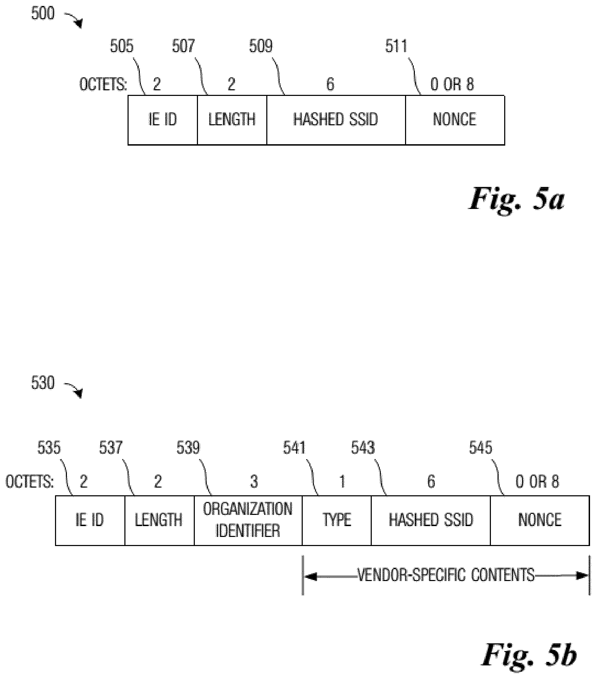

Figure 5a illustrates a first example hashed SSID IE 500. Hashed SSID IE 500 includes an IE ID field 505 carrying a new IE identifier defined for Hashed SSID IE 500, a Length field 507 indicating the number of total octets after Length field 507 in Hashed SSID IE 500, and a Hashed SSID field 509 carrying the truncated hashed SSID (e.g., the first six octets the hashed SSID). A Nonce field 511 may be optionally present in Hashed SSID IE 500 to indicate a random number, which is generated and used for generating the hashed SSID by an AP or STA transmitting Hashed SSID IE 500. The presence or absence of the Nonce field in Hashed SSID IE 500 may be inferred from the value of Length field 507.

Figure 5b illustrates a second example hashed SSID IE 530. Hashed SSID IE 530 may also be used in Wi-Fi Alliance (WFA) certification specification by using IEEE 802.11 defined vendor-specific IE format, in particular IEEE Standard 802.11-2012.. As shown in Figure 5b, Hashed SSID IE 530 includes an IE ID field 535 set to the value of "221" for 802.11 defined vendor-specific IE format, a Length field 537 specifying the number of total octets after Length field 537 in hashed SSID IE 530, an Organization Identifier (OI) field 539 set to the value of "50 6F 9A" for WFA (Wi-Fi Alliance), a type field 541 carrying a new identifier allocated by WFA for Hashed SSID IE 530, a Hashed SSID field 543, and optionally a Nonce field 545. The presence or absence of Nonce field 545 in Hashed SSID IE 530 may be inferred from the value of Length field 537. It should be noted that WFA is used here merely as an example. Other organizations or manufacturers may use the IEEE 802.11 defined vendor-specific IE format with similar IE contents as described here, except OI field 539 should be set to represent the appropriate organization, to implement the same concept.

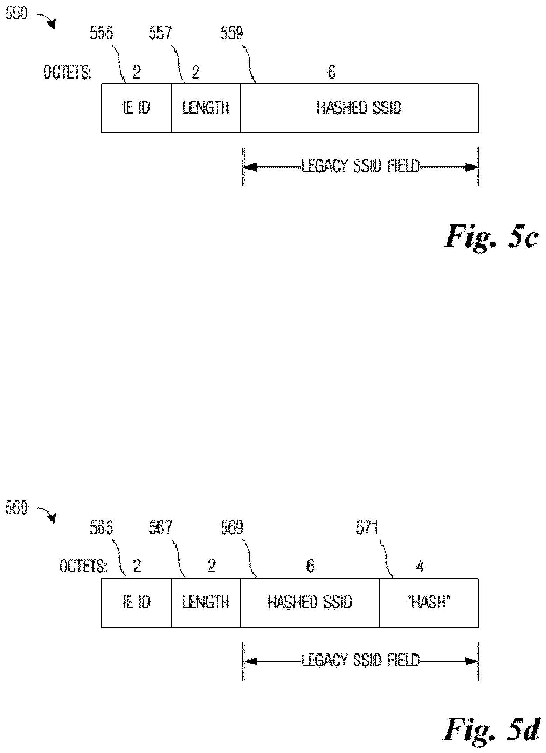

Figure 5c illustrates a first example legacy SSID IE 550 with legacy SSID field support for hashed SSIDs. Legacy SSID IE 550 includes an IE ID field 555 carrying an IE identifier assigned for legacy SSID IEs, a Length field 557 indicating the number of total octets after Length field 557 in legacy SSID IE 550, a Hashed SSID field 559 carrying the truncated hashed SSID (e.g., the first six octets of the hashed SSID). Furthermore, Hashed SSID field 559 being 6 in length is used as an example and, depending on the truncation function used (such as truncation units 315 and 370), that other lengths are possible as long as the length meets legacy SSID IE specifications. It is noted that Hashed SSID field 559 has the same format and/or structure as the legacy SSID field. Therefore, a legacy AP and/or STA that receives legacy SSID IE 550 may interpret the legacy SSID field as containing an SSID in plain text form. Figure 5d illustrates a second example legacy SSID IE 560 with legacy SSID field support for hashed SSIDs. Legacy SSID IE 560 includes an IE ID field 565 carrying an IE identifier assigned for legacy SSID IEs, a Length field 567 indicating the number of total octets after Length field 567 in legacy SSID IE 560, a Hashed SSID field 569 carrying the truncated hashed SSID (e.g., the first six octets of the hashed SSID), and a Pre-defined Value field 571 carrying a pre-defined value, e.g., a text string "HASH". It is noted that "HASH" is used here merely as an example and that other text strings, pre-defined values, pre-defined sequences, and the like, may be used. Since most SSIDs are strings of human-readable alphabets, numerical numbers, and a few common symbols such as "-", ".", ",", "#", "^", "*", "@", and the like, special efforts may be made to avoid using any of these characters in the pre-defined value, string, or sequence to reduce the chances of having a false match. It is also noted that the pre-defined value being located at the end of the truncated hashed SSID is used as an example and that other positions of the pre-defined value are possible. Furthermore, Hashed SSID field 569 and Pre-defined Value field 571 being 6 and 4 octets in length, respectively, are used as examples and that other lengths are possible as long as their combined length meets legacy SSID IE specifications. Hashed SSID field 569 and Pre-defined Value field 571 make up a legacy SSID field, therefore, a legacy AP and/or STA that has received legacy SSID IE 560 may interpret the legacy SSID field (comprising Hashed SSID field 569 and Pre-defined Value field 571) as containing an SSID in plain text form.

In some embodiments, the presence of a Hashed SSID IE in the Beacon or Probe Response frame indicates that the AP is capable of using Hashed SSID. In the same or other embodiments, the presence of a Hashed SSID IE in the Probe Request, Association Request, or Reassociation Request frame indicates that the STA is capable of using Hashed SSID.

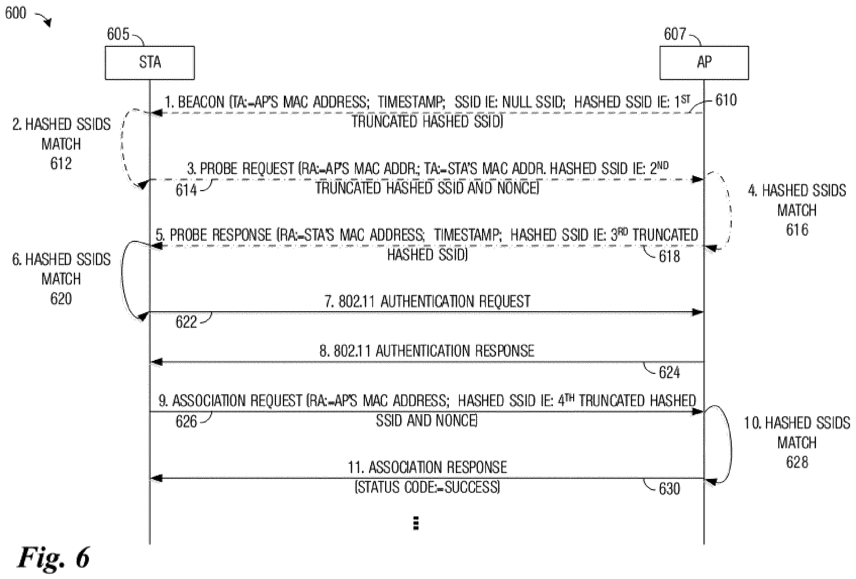

Figure 6 illustrates a message exchange diagram 600 of example messages exchanged between a STA and an AP as the STA connects with the AP. Message exchange diagram 600 illustrates example messages exchanged between a STA 605 and an AP 607, as well as operations performed by STA 605 and/or AP 607. Message exchange diagram 600 may begin with AP 607, which is hashed SSID compliant, broadcasts a Beacon frame (shown as event 610). The Beacon frame includes: a TA field set to the MAC address of AP 607, a TimeStamp field, an SSID IE set to a null SSID, a Hashed SSID IE that includes a first truncated hashed SSID generated from the SSID of AP 607, which would have been broadcasted explicitly otherwise.

The details of generating different hashed identifiers from the same input are described earlier, in Figures 3a, 3b, 4a, and 4b, and in co-assigned U.S. Patent Application Number 14/105,895. The content of the TimeStamp field, which changes constantly and repeats only after more than 580,000 years, when used in generating the Hashed SSID, helps AP 607 to avoid sending a static Hashed SSID so as to make it more costly for an attacker trying to impersonate as AP 607. A legacy STA sees the Beacon frame as a Beacon frame with hidden SSID enabled. Typically, the legacy STA may ignore the Hashed SSID IE as it doesn't understand the IE ID. The legacy STA may check if the MAC address of AP 607 belongs to one of the APs in its preferred WLAN List. If not, the legacy STA may ignore AP 607.

STA 605, recognizing the Hashed SSID IE, may perform a check to determine if the first truncated hashed SSID included in the Hashed SSID IE matches with one or more truncated hashed SSID generated by STA 605 utilizing SSID(s) of APs in the preferred WLAN list of STA 605 (shown as event 612). STA 605 may use a technique for generating truncated hashed SSIDs, such as those discussed previously in Figures 3a, 3b, 4a, and 4b. As an illustrative example, STA 605 may use the value contained in the TimeStamp field of the Beacon frame to generate the truncated hashed SSIDs. STA 605 may compare the truncated hashed SSIDs and if there is a match, STA 605 may consider that AP 607 is a member of its preferred WLAN list. It is noted that both STA 605 and AP 607 use the same hashing function, such as SHA-256. Events 610 and 612 may be considered to be part of a passive scanning procedure wherein STA 605 can obtain information about AP 607 so that STA 605 can decide to connect with or to not connect with AP 607.

Alternatively, the Beacon frame includes: a TA field set to the MAC address of AP 607, a TimeStamp field, a legacy SSID IE with a SSID field that contains the first truncated hashed SSID and with a Length field set to a pre-defined value that indicates that the SSID field actually contains a hashed SSID, as described in Figure 5c, for example. The pre-defined value is the length of the first truncated hashed SSID. Since STA 605 recognizes that the SSID field contains a hashed SSID, STA 605 may perform event 612 as described previously.

Yet alternatively, the Beacon frame includes: a TA field set to the MAC address of AP 607, a TimeStamp field, and a legacy SSID IE with a Length field set to a first pre-defined value and with a SSID field that contains the first truncated hashed SSID and a second pre-defined value that (together with the first pre-defined value) indicates that the remaining portion of the SSID field actually contains a hashed SSID, as described in Figure 5d, for example. The first pre-defined value is a sum of the length of the hashed SSID and the length of the second pre-defined value. Since STA 605 recognizes that the SSID field contains a hashed SSID, STA 605 may perform event 612 as described previously.

Active scanning is another scanning procedure wherein STA 605 can obtain information about AP 607 so that STA 605 can decide to connect with or to not connect with AP 607. Active scanning may include STA 605 transmitting a Probe Request frame to AP 605 (shown as event 614). The Probe Request frame includes: a Receiver Address (RA) field set to the MAC address of AP 607, a TA field set to the MAC address of STA 605, a Hashed SSID IE that includes a second truncated hashed SSID generated from a SSID that STA 605 anticipates as the SSID of AP 607, and optionally, a Nonce used by STA 605 in the generating of the second truncated hashed SSID. Alternatively, the Probe Request frame includes: a RA field set to the MAC address of AP 607, a TA field set to the MAC address of STA 605, and a legacy SSID IE with a SSID field that contains the second truncated hashed SSID and with a Length field set to a pre-defined value that indicates that the SSID field actually contains a hashed SSID, as described in Figure 5c, for example. Yet alternatively, the Probe Request frame includes: a RA field set to the MAC address of AP 607, a TA field set to the MAC address of STA 605, and a legacy SSID IE with a Length field set to a first pre-defined value and with a SSID field that contains the second truncated hashed SSID and a second pre-defined value that (together with the first pre-defined value) indicates that the remaining portion of the SSID field actually contains a hashed SSID, as described in Figure 5d, for example.

Active scanning may also include AP 607 performing a check to determine if the second truncated hashed SSID included in Hashed SSID IE in the Probe Request frame matches with a truncated hashed SSID generated by AP 607 (shown as event 616). AP 607 may use a technique for generating truncated hashed SSIDs, such as those discussed previously in Figures 3a, 3b, 4a, and 4b. As an illustrative example, AP 607 may use the Nonce (or the transmitter address (TA), i.e., the MAC address of the STA, if the legacy SSID IE is used) in the Probe Request frame and its own SSID to generate the truncated hashed SSID to compare with the second truncated hashed SSID. Alternatively, AP 607 may perform a check to determine if the second truncated hashed SSID included in legacy SSID IE in the Probe Request frame matches with a truncated hashed SSID generated by AP 607.

It is noted that related truncated hashed SSIDs, such as the first truncated hashed SSID included in the Beacon frame (event 610) and the truncated hashed SSID(s) generated by STA 605 in event 612, as well as the second truncated hashed SSID included in the Probe Request frame (event 614) and the truncated hashed SSID generated by AP 607 in event 616, and the like, are generated using the same hash function. The use of the same hash function ensures that matching SSIDs result in matching truncated hashed SSIDs. If different hash functions are used, the probability of matching truncated hashed SSIDs even with matching SSIDs is practically zero. However, unrelated truncated hashed SSIDs may be generated using different hash functions.

If there is a match, AP 607 may send a Probe Response frame to STA 605 (shown as event 618). The Probe Response frame includes: a RA field set to the MAC address of STA 605, a TimeStamp field, and a Hashed SSID IE that includes a third truncated hashed SSID generated from the SSID of AP 607. Alternatively, the Probe Response frame includes: a RA field set to the MAC address of STA 605, a TimeStamp field, and a legacy SSID IE with an SSID field that contains the third truncated hashed SSID and with a Length field set to a pre-defined value that indicates that the SSID field actually contains a hashed SSID. Yet alternatively, the Probe Response frame includes: a RA field set to the MAC address of STA 605, a TimeStamp field, and a legacy SSID IE with a Length field set to a first pre-defined value and with an SSID field that contains the third truncated hashed SSID and a second pre-defined value that (together with the first pre-defined value) indicates that the remaining portion of the SSID field actually contains a hashed SSID.

Active scanning may also include STA 605 performing a check to determine if the third truncated hashed SSID included in the Hashed SSID IE in the Probe Response frame matches with a truncated hashed SSID generated by STA 605 (shown as event 620). STA 605 may use a technique for generating truncated hashed SSIDs, such as those discussed previously in Figures 3a, 3b, 4a, and 4b. As an illustrative example, STA 605 may use a value in the TimeStamp field in the Probe Response frame to generate the truncated hashed SSID. STA 605 may compare the truncated hashed SSID with the third truncated hashed SSID and if there is a match, STA 605 may consider that AP 607 is a member of its preferred WLAN list. Alternatively, STA 605 may perform a check to determine if the third truncated hashed SSID included in the legacy SSID IE in the Probe Response frame matches with a truncated hashed SSID generated by STA 605. Co-assigned U.S. Patent Application Number 14/105,895 describes why and how using difference truncated hash of the same ID in subsequent frames (with different frame types, Timestamp values, nonce values, etc.) and checking iteratively if the match persists can help to reduce the residual false match probability. At any subsequent step, if the corresponding Hashed SSIDs no longer matches, the discovery or association procedure may be stopped. Generally, STA 605 may use active scanning or passive scanning and usually not both active scanning and passive scanning. However, a situation may arise where STA 605 does not have sufficient information from the Beacon frame and STA 605 may utilize active scanning to obtain additional information from AP 607 before making its decision to whether or not connect with AP 607, for example. In such a situation, STA 605 may perform both passive scanning and active scanning.

STA 605, after determining to connect with AP 607, may transmit an IEEE 802.11 Authentication Request frame (shown as event 622). STA 605 may determine to connect with AP 607 after performing passive scanning (events 610 and 612) or active scanning (events 614, 618, and 620). AP 607 may transmit an IEEE 802.11 Authentication Response frame (shown as event 624). Events 622 and 624 are part of the IEEE 802.11 Open System Authentication procedure.

STA 605 may send an Association Request frame (shown as event 626). The Association Request frame includes: a RA field set to the MAC address of AP 607, a Hashed SSID IE that includes a fourth truncated hashed SSID generated from a SSID that STA 605 anticipates as the SSID of AP 607, and optionally, a Nonce used by STA 605 in the generating of the fourth truncated hashed SSID. Alternatively, the Association Request frame includes: a RA field set to the MAC address of AP 607, and a legacy SSID IE with a SSID field that contains the fourth truncated hashed SSID and with a Length field set to a pre-defined value that indicates that the SSID field actually contains a hashed SSID. Yet alternatively, the Association Request frame includes: a RA field set to the MAC address of AP 607, and a legacy SSID IE with a Length field set to a first pre-defined value and with a SSID field that contains the fourth truncated hashed SSID and a second pre-defined value that indicates (together with the first pre-defined value) that the remaining portion of the SSID field actually contains a hashed SSID. AP 607 may perform a check to determine the fourth truncated hashed SSID included in the Hashed SSID IE (or alternatively, the legacy SSID IE configured as shown in Figures 5c or 5d) in the Association Request frame matches with a truncated hashed SSID generated by AP 607 (shown as event 628). AP 607 may use a technique for generating truncated hashed SSIDs, such as those discussed previously in Figures 3a, 3b, 4a, and 4b. As an illustrative example, AP 607 may use the Nonce (or the TA, i.e., the MAC address of the STA, if the legacy SSID IE is used) in the Association Request frame and its own SSID to generate the truncated hashed SSID to compare with the fourth truncated hashed SSID. If there is a match, AP 607 may send an Association Response frame (shown as event 630). The Association Response frame may include a status code set to SUCCESS. The example messages exchanged between STA 605 and AP 607 may also include messages involved in EAP/802.1X/Radius authentication, a 4-way handshake, and secured data communications.

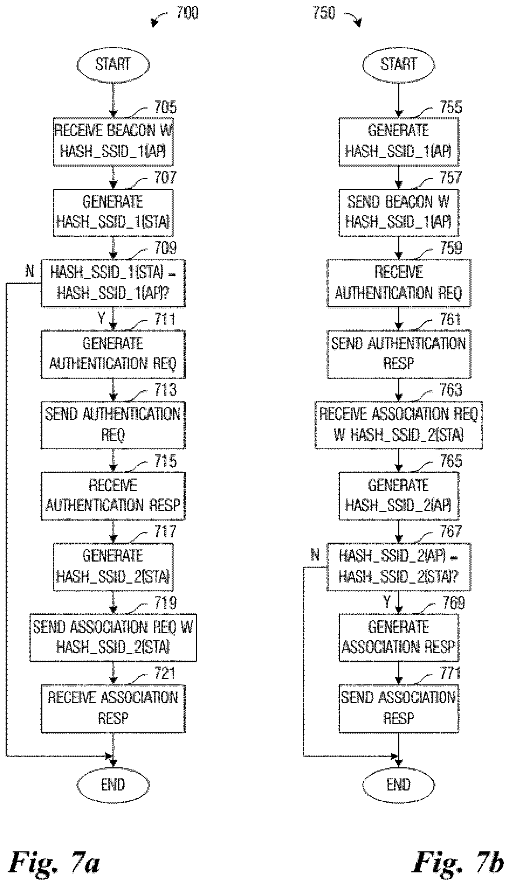

Figure 7a illustrates a flow diagram of example operations 700 occurring in a STA as the STA connects to an AP using a passive scanning procedure. Operations 700 may be indicative of operations occurring in a STA, such as STAs 110 - 118, as the STA connects to an AP, such as AP 105, using a passive scanning procedure.

Operations 700 may begin with the STA receiving a Beacon frame broadcast by the AP that includes a first truncated hashed SSID, denoted HASH_SSID_1(AP) (block 705). HASH_SSID_1(AP) may have been generated using an SSID associated with the AP. HASH_SSID_1(AP) may have been generated using the SSID associated with the AP modified with a value, e.g., a timestamp, a frame type, a frame sequence number, and the like, to help prevent a static hashed SSID from occurring. The Beacon frame may include the value used to modify the SSID so that the STA will be able to recreate the truncated hashed SSID. The STA may generate its own first truncated hashed SSID, denoted HASH_SSID_1(STA) (block 707). Since the Beacon frame did not include the SSID of the AP, the STA may utilize SSIDs of APs that are in its preferred WLAN list, an SSID associated with a MAC address of the AP, and the like.

The STA may perform a check to determine if HASH_SSID_1(STA) is equal to HASH_SSID_1(AP) (block 709). If HASH_SSID_1(STA) is not equal to HASH_SSID_1(AP), then operations 700 may end since the STA does not know the SSID of the AP. If HASH_SSID_1(STA) is equal to HASH_SSID_1(AP), the STA may generate an Authentication Request frame (block 711) and send the Authentication Request frame to the AP (block 713). The STA may receive an Authentication Response frame (block 715).

The STA may generate a second truncated hashed SSID, denoted HASH_SSID_2(STA) (block 717). HASH_SSID_2(STA) may be generated from the SSID used in generating HASH_SSID_1(STA) which resulted in the match with HASH_SSID_1(AP), in other words, the SSID of the AP. The STA may use a value to modify the SSID, e.g., a Nonce, to help prevent a static hashed SSID from occurring. The STA may send an Association Request frame including the HASH_SSID_2(STA) to the AP (block 719). The STA may include the Nonce value used to modify the SSID in the Association Request frame so that the AP will be able to recreate the truncated hashed SSID. If the AP verified the SSID used by the STA with its own SSID, the STA may receive an Association Response frame from the AP with a Status Code set to SUCCESS (block 721).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

Figure 7b illustrates a flow diagram of example operations 750 occurring in an AP as a STA connects to the AP using a passive scanning procedure. Operations 700 may be indicative of operations occurring in an AP, such as such as AP 105, as a STA, such as STAs 110 - 118, connects to the AP, using a passive scanning procedure.

Operations 750 may begin with the AP generating a first truncated hashed SSID, denoted HASH_SSID_1(AP) (block 755). HASH_SSID_1(AP) may be generated from the SSID of the AP. The SSID of the AP may be modified with a value, such as a timestamp, a frame type, a frame sequence number, and the like, prior to hashing. The AP may transmit a Beacon frame including the HASH_SSID_1(AP) (block 757). The Beacon frame may include the value used to modify the SSID so that the STA will be able to recreate the truncated hashed SSID. The AP may receive an Authentication Request frame from the STA (block 759) and send an Authentication Response frame to the STA (block 761).

The AP may receive an Association Request frame from the STA with a second truncated hashed SSID, denoted HASH_SSID_2(STA) (block 763). The AP may generate a second truncated hashed SSID, denoted HASH_SSID_2(AP) (block 765). HASH_SSID_2(AP) may be generated from the SSID of the AP. The AP may use a value to modify the SSID, e.g., a Nonce provided by the STA in the Associated Request frame. The AP may perform a check to determine if HASH_SSID_2(AP) is equal to HASH_SSID_2(STA) (block 767). If HASH_SSID_2(AP) is not equal to HASH_SSID_2(STA), then operations 750 may end since the SSID of the AP does not match with the SSID of a WLAN that the STA is attempting to connect with. If HASH_SSID_2(AP) is equal to HASH_SSID_2(STA), the AP may generate an Association Response frame (block 769). The Association Response frame may include a Status Code set to SUCCESS. The AP may send the Association Response frame to the STA (block 771).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

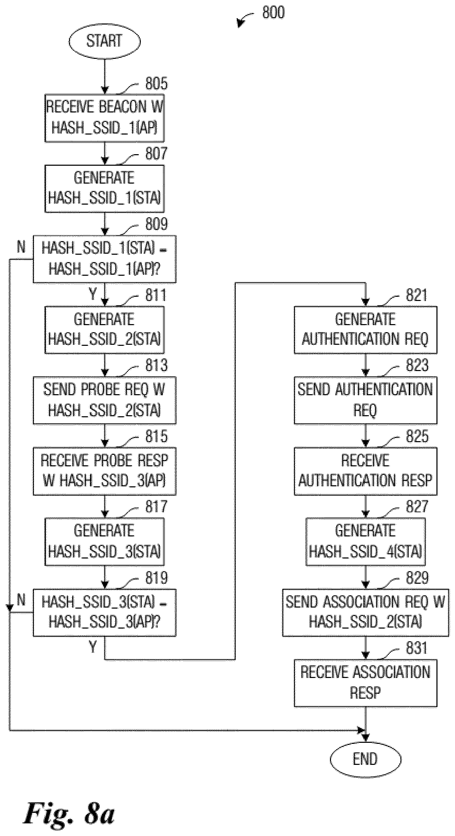

Figure 8a illustrates a flow diagram of example operations 800 occurring in a STA as the STA connects to an AP using a combination of passive and active scanning procedures. Operations 800 may be indicative of operations occurring in a STA, such as STAs 110 - 118, as the STA connects to an AP, such as such as AP 105, using a combination of passive and active scanning procedures.

Operations 800 may begin with the STA receiving a Beacon frame broadcast by the AP that includes a first truncated hashed SSID, denoted HASH_SSID_1(AP) (block 805). HASH_SSID_1(AP) may have been generated using an SSID associated with the AP. HASH_SSID_1(AP) may have been generated using the SSID associated with the AP modified with a value, e.g., a timestamp, a frame type, a frame sequence number, and the like, to help prevent a static hashed SSID from occurring. The Beacon frame may include the value used to modify the SSID so that the STA will be able to recreate the truncated hashed SSID. The STA may generate its own first truncated hashed SSID, denoted HASH_SSID_1(STA) (block 807). Since the Beacon frame did not include the SSID of the AP, the STA may utilize SSIDs of APs that are in its preferred WLAN list, an SSID associated with a MAC address of the AP, and the like.

The STA may perform a check to determine if HASH_SSID_1(STA) is equal to HASH_SSID_1(AP) (block 809). If HASH_SSID_1(STA) is not equal to HASH_SSID_1(AP), then operations 800 may end since the STA does not know the SSID of the AP. If HASH_SSID_1(STA) is equal to HASH_SSID_1(AP), the STA may generate a second truncated hashed SSID, denoted HASH_SSID_2(STA) (block 811). HASH_SSID_2(STA) may be generated using the SSID used to generate the HASH_SSID_1(STA). The STA may modify the SSID with a value, e.g., a Nonce, prior to hashing. The STA may transmit a Probe Request frame including HASH_SSID_2(STA) to the AP (block 813). The STA may include the value used to modify the SSID in the Probe Request frame so that the AP will be able to recreate the truncated hashed SSID.

The STA may receive a Probe Response frame from the AP that includes a third truncated hashed SSID, denoted HASH_SSID_3(AP) (block 815). The STA may generate its own third truncated hashed SSID, denoted HASH_SSID_3(STA) (block 817). The HASH_SSID_3(STA) may be generated using the SSID used to generate HASH_SSID_1(STA) and HASH_SSID_2(STA). Prior to hashing, the STA may modify the SSID with a value in the Probe Response frame, e.g., a timestamp, a frame type, a frame sequence number, and the like, which is also used by the AP to generate HASH_SSID_3(AP).

The STA may perform a check to determine if HASH_SSID_3(STA) is equal to HASH_SSID_3(AP) (block 819). If HASH_SSID_3(STA) is not equal to HASH_SSID_3(AP), then operations 800 may end since the SSIDs do not match. If HASH_SSID_3(STA) is equal to HASH_SSID_3(AP), the STA may generate an Authentication Request frame (block 821) and send the Authentication Request frame to the AP (block 823). The STA may receive an Authentication Response frame (block 825).

The STA may generate a fourth truncated hashed SSID, denoted HASH_SSID_4(STA) (block 827). HASH_SSID_4(STA) may be generated from the SSID used in generating HASH_SSID_1(STA) which resulted in the match with HASH_SSID_1(AP), as well as HASH_SSID_2(STA) and HASH_SSID_3(STA). In other words, the SSID of the AP. Prior to hashing, the STA may use a value to modify the SSID, e.g., a Nonce, to help prevent a static hash from occurring. The STA may send an Association Request frame including the HASH_SSID_4(STA) to the AP (block 829). The STA may include the value used to modify the SSID in the Association Request frame so that the AP will be able to recreate the truncated hashed SSID. If the AP verified the SSID used by the STA with its own SSID, the STA may receive an Association Response frame from the AP with a Status Code set to SUCCESS (block 831).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

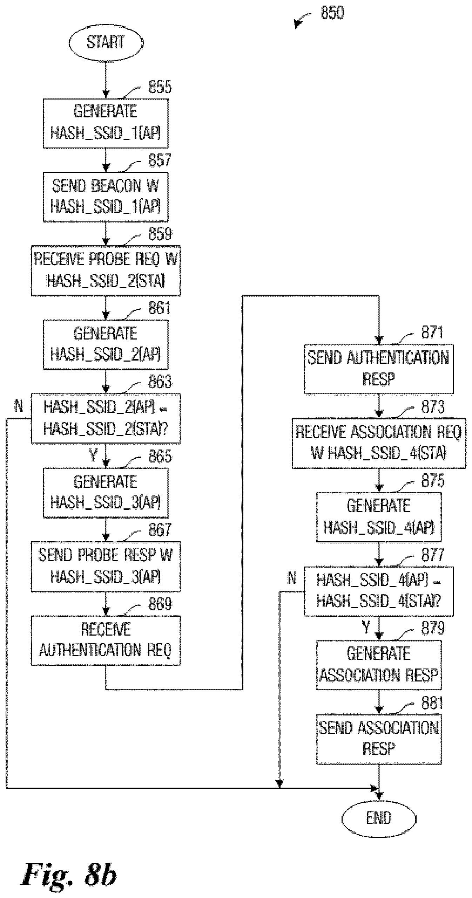

Figure 8b illustrates a flow diagram of example operations 850 occurring in an AP as a STA connects to the AP using a combination of passive and active scanning procedures. Operations 850 may be indicative of operations occurring in an AP, such as such as AP 105, as a STA, such as STAs 110 - 118, connects to the AP using a combination of passive and active scanning procedures.

Operations 850 may begin with the AP generating a first truncated hashed SSID, denoted HASH_SSID_1(AP) (block 855). HASH_SSID_1(AP) may be generated from the SSID of the AP. The SSID of the AP may be modified with a value, such as a timestamp, a frame type, a frame sequence number, and the like. The AP may transmit a Beacon frame including the HASH_SSID_1(AP) (block 857). The Beacon frame may include the value used to modify the SSID so that the STA will be able to recreate the truncated hashed SSID. The AP may receive a Probe Request frame from the STA that includes a second truncated hashed SSID, denoted HASH_SSID_2(STA) (block 859). The AP may generate its own second truncated hashed SSID, denoted HASH_SSID_2(AP) (block 861). HASH_SSID_2(AP) may be generated from the SSID of the AP. The SSID of the AP may be modified by a value in the Probe Request, e.g., a Nonce, prior to hashing.

The AP may perform a check to determine if HASH_SSID_2(AP) is equal to HASH_SSID_2(STA) (block 863). If HASH_SSID_2(AP) is not equal to HASH_SSID_2(STA), then operations 850 may end since the SSID of the AP does not match with the SSID of a WLAN that the STA is attempting to connect with. If HASH_SSID_2(AP) is equal to HASH_SSID_2(STA), the AP may generate a third truncated hashed SSID, denoted HASH_SSID_3(AP) (block 865). HASH_SSID_4(AP) may be generated from the SSID of the AP. The SSID of the AP may be modified with a value, such as a timestamp, a frame type, a frame sequence number, and the like, prior to hashing. The AP may send a Probe Response frame including HASH_SSID_3(AP) to the STA (block 867). The Probe Response frame may include the value used to modify the SSID so that the STA will be able to recreate the truncated hashed SSID.

The AP may receive an Authentication Request frame from the STA (block 869) and send an Authentication Response frame to the STA (block 871). The AP may receive an Association Request frame including a fourth truncated hashed SSID, denoted HASH_SSID_4(STA) (block 873). The AP may generate a fourth truncated hashed SSID, denoted HASH_SSID_4(AP) (block 875). HASH_SSID_4(AP) may be generated from the SSID of the AP. The AP may use a value in the Association Request frame to modify the SSID, e.g., a Nonce, prior to hashing. The AP may perform a check to determine if HASH_SSID_4(AP) is equal to HASH_SSID_4(STA) (block 877). If HASH_SSID_4(AP) is not equal to HASH_SSID_4(STA), then operations 850 may terminate since the SSIDs to not match. If HASH_SSID_4(AP) is equal to HASH_SSID_4(STA), the AP may generate an Association Response frame with a Status Code set to SUCCESS (block 879). The AP may send the Association Response frame to the STA (block 881).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

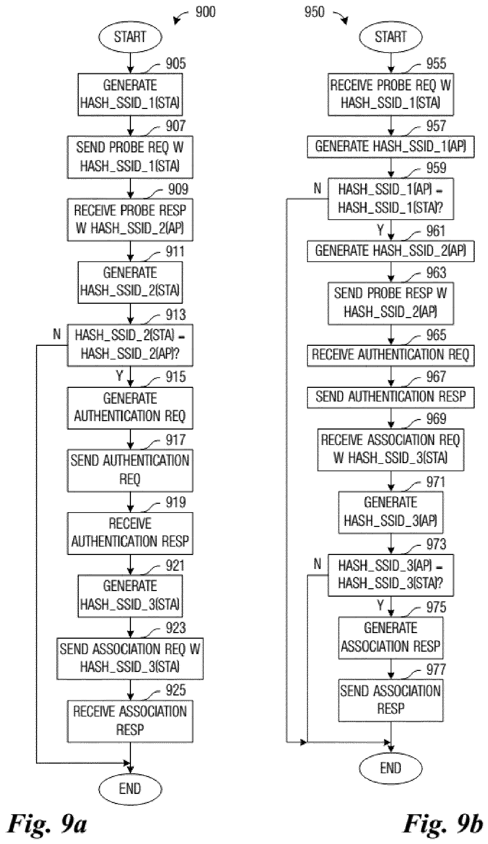

Figure 9a illustrates a flow diagram of example operations 900 occurring in a STA as the STA connects to an AP using an active scanning procedure. Operations 900 may be indicative of operations occurring in a STA, such as STAs 110 - 118, as the STA connects to an AP, such as such as AP 105, using an active scanning procedure.

Operations 900 may begin with the STA generating a first truncated hashed SSID, denoted HASH_SSID_1(STA) (block 905). HASH_SSID_1(STA) may be generated using the SSID of an AP, which the STA has stored before and is searching for at the moment. The STA may modify the SSID with a value, e.g., a Nonce. The STA may transmit a Probe Request frame including HASH_SSID_1(STA) to the AP (block 907). The Probe Request frame may include the value used to modify the SSID so that the AP will be able to recreate the truncated hashed SSID.

The STA may receive a Probe Response frame from the AP that includes a second truncated hashed SSID, denoted HASH_SSID_2(AP) (block 909). The STA may generate its own second truncated hashed SSID, denoted HASH_SSID_2(STA) (block 911). The HASH_SSID_2(STA) may be generated using the SSID used to generate HASH_SSID_1(STA). The STA may modify the SSID with a value in the Probe Response frame, e.g., a timestamp, a frame type, a frame sequence number, and the like, which is also used by the AP to generate HASH_SSID_2(AP). The STA may perform a check to determine if HASH_SSID_2(STA) is equal to HASH_SSID_2(AP) (block 913). If HASH_SSID_2(STA) is not equal to HASH_SSID_2(AP), then operations 900 may end since the SSIDs do not match. If HASH_SSID_2(STA) is equal to HASH_SSID_2(AP), the STA may generate an Authentication Request frame (block 915) and send the Authentication Request frame to the AP (block 917). The STA may receive an Authentication Response frame (block 919).

The STA may generate a third truncated hashed SSID, denoted HASH_SSID_3(STA) (block 921). HASH_SSID_3(STA) may be generated from the SSID used in generating HASH_SSID_1(STA) which resulted in the match with HASH_SSID_1(AP), as well as HASH_SSID_2(STA). In other words, the SSID of the AP. The STA may use a value to modify the SSID, e.g., a Nonce, to help prevent a static hash from occurring. The STA may send an Association Request frame including the HASH_SSID_3(STA) to the AP (block 923). The STA may include the value used to modify the SSID in the Association Request frame so that the AP will be able to recreate the truncated hashed SSID. If the AP verified the SSID used by the STA with its own SSID, the STA may receive an Association Response frame from the AP with a Status Code set to SUCCESS (block 925).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

Figure 9b illustrates a flow diagram of example operations 950 occurring in an AP as a STA connects to the AP using an active scanning procedure. Operations 950 may be indicative of operations occurring in an AP, such as such as AP 105, as a STA, such as STAs 110 - 118, connects to the AP using an active scanning procedure.

Operations 950 may begin with the AP receiving a Probe Request frame from the STA that includes a first truncated hashed SSID, denoted HASH_SSID_1(STA) (block 955). The AP may generate its own first truncated hashed SSID, denoted HASH_SSID_1(AP) (block 957). HASH_SSID_1(AP) may be generated from the SSID of the AP. prior to hashing, the SSID of the AP may be modified by a value in the Probe Request frame, e.g., a Nonce, which is also used by the STA to generate HASH_SSID_1(STA).

The AP may perform a check to determine if HASH_SSID_1(AP) is equal to HASH_SSID_1(STA) (block 959). If HASH_SSID_1(AP) is not equal to HASH_SSID_1(STA), then operations 950 may end since the SSID of the AP does not match with the SSID of a WLAN that the STA is attempting to connect with. If HASH_SSID_1(AP) is equal to HASH_SSID_1(STA), the AP may generate a second truncated hashed SSID, denoted HASH_SSID_2(AP) (block 961). HASH_SSID_2(AP) may be generated from the SSID of the AP. The SSID of the AP may be modified with a value, such as a timestamp, a frame type, a frame sequence number, and the like, prior to hashing. The AP may send a Probe Response frame including HASH_SSID_2(AP) to the STA (block 963). The Probe Response frame may include the value used to modify the SSID so that the STA will be able to recreate the truncated hashed SSID.

The AP may receive an Authentication Request frame from the STA (block 965) and send an Authentication Response frame to the STA (block 967). The AP may receive an Association Request frame including a third truncated hashed SSID, denoted HASH_SSID_3(STA) (block 969). The AP may generate a third truncated hashed SSID, denoted HASH_SSID_3(AP) (block 971). HASH_SSID_3(AP) may be generated from the SSID of the AP. The AP may use a value in the Association Request frame to modify the SSID, e.g., a Nonce, prior to hashing. The AP may perform a check to determine if HASH_SSID_3(AP) is equal to HASH_SSID_3STA) (block 973). If HASH_SSID_3(AP) is not equal to HASH_SSID_3(STA), then operations 950 may terminate since the SSIDs to not match. If HASH_SSID_3(AP) is equal to HASH_SSID_3(STA), the AP may generate an Association Response frame with a Status Code set to SUCCESS (block 975). The AP may send the Association Response frame to the STA (block 977).

The truncated hashed SSIDs may be sent from the STA to the AP or from the AP to the STA in a Hashed SSID IE configured as described previously. Alternatively, the truncated hashed SSIDs may be sent from the STA to the AP or from the AP to the STA in a legacy SSID IE configured as described previously.

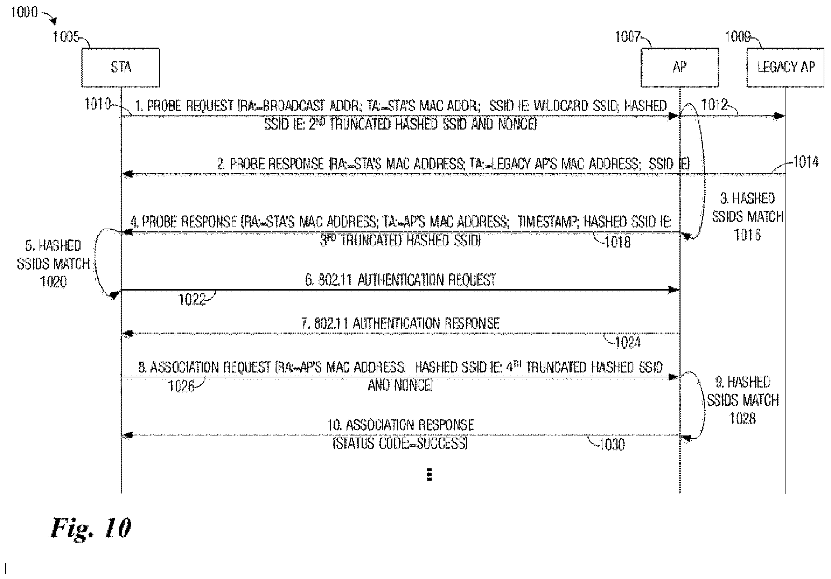

Figure 10 illustrates a message exchange diagram 1000 of example messages exchanged between a STA, an AP, and a legacy AP as the STA connects with the AP. Message exchange diagram 1000 illustrates example messages exchanged between a STA 1005, an AP 1007, and a legacy AP 1009, as well as operations performed by STA 1005 and AP 1007. Message exchange diagram 1000 may begin with STA 1000 sending a Probe Request frame (shown as event 1010) including a first hashed SSID that the STA has stored before and is search for at the moment. Since STA 1005 is hashed SSID compliant and knows (or thinks that it knows) the SSID of hashed SSID compliant AP 1007, but not the MAC address of AP 1007 (which may be a typical scenario when using WLAN in a public area, such as an airport lounge, for example), STA 1005 may broadcast the Probe Request frame. To AP 1009, which is not hashed SSID compliant, the Probe Request frame has the appearance of a Wildcard Probe Response frame and AP 1009 may respond with a Probe Response frame (shown as event 1014). For discussion purposes, assume that STA 1005 is not interested in the Probe Response frame sent by AP 1009 since AP 1009 is not hashed SSID compliant, thereby terminating the message exchange between STA 1005 and AP 1009. To AP 1007, the Probe Request frame has the appearance of a dedicated Probe Request frame (due to the presence of the first hashed SSID). Therefore, AP 1007 does not respond with a Probe Response frame unless a first hashed SSID (or truncated hashed SSID) generated by AP 1007 matches with the first hashed SSID included in the Probe Request frame (shown as events 1016 and 1018). If the two first hashed SSIDs match, AP 1007 generates a second hashed SSID from the SSID associated with the AP and sends a Probe Response frame including the second hashed SSID to STA 1005.

STA 1005 may respond to the Probe Response frame from AP 1007 by performing a check to determine if a second hashed SSID that STA 1005 generates matches the second hashed SSID included in the Probe Response frame (shown as event 1020). If the two second hashed SSIDs match, STA 1005 may send an IEEE 802.11 Authentication Request frame (shown as event 1022) and AP 1007 may send an IEEE 802.11 Authentication Response frame (shown as event 1024). STA 1005 may continue the message exchange with an Association Request frame that includes a third hashed SSID generated with the SSID that matches with the one of AP 1007 (shown as event 1026). AP 1007 may check to determine if a third hashed SSID that AP 1007 generates matches the third hashed SSID included in the Association Request frame (shown as event 1028). If the two third hashed SSIDs match, AP 1007 may respond with an Association Response frame that includes a Status Code set to SUCCESS (shown as event 1030). The example messages exchanged between STA 1005 and AP 1007 (and an authentication server) may also include messages involved in EAP/802.1X/Radius authentication, a 4-way handshake, and secured data communications.

Aspects of this disclosure also provide techniques for maintaining backward compatibility. An example embodiment technique is described as follows: When an AP, capable of Hashed SSID operation, transmits a Beacon frame with the Hashed SSID IE, such as event 610 in Figure 6, it may include a legacy SSID IE with the null SSID. A legacy STA may see the AP as an AP with hidden SSID enabled. Then the legacy STA may check the MAC address of the AP to see if it belongs to one of its preferred AP. If not, the legacy STA will ignore the AP. It may not be advantageous to send both Hashed SSID and the plain text full SSID simultaneously. A reason to include a null SSID in the legacy SSID IE here is to avoid otherwise possible erroneous behavior of an implementation of a legacy STA if it sees a Beacon frame without an SSID IE at all. When a STA, capable of Hashed SSID operation, transmits an Association or Reassociation Request frame with the Hashed SSID IE, such as event 626 of Figure 6, it may remove the legacy SSID IE entirely from the Request as it already has the AP's MAC address thus may set the RA field in the Request frame to the AP's MAC address. A legacy AP will ignore the Request frame as the RA field doesn't match for it.

Another example embodiment is described as follows: When a STA, capable of Hashed SSID operation, transmits a Probe Request frame with the Hashed SSID IE, if the STA already knows the MAC address of the Hashed-SSID-capable AP, e.g., after receiving the Beacon frame from the AP in event 610 of Figure 6 or after the user manually types in the MAC address of the AP, then the STA may use that the AP's MAC address as the RA in the Probe Request frame (effectively making it a unicast Probe Request frame) and remove the legacy SSID IE entirely. Such an example is shown in event 614 of Figure 6. A legacy AP will ignore the Probe Request frame as the RA field doesn't match (i.e., the RA is not its MAC address nor the broadcast MAC address) for it.

If the STA doesn't know the MAC address of the Hashed-SSID-capable AP, e.g., only the SSID of the AP is provided to an user after the user purchases temporary usage to a fee-bearing WLAN, then the STA may also include a legacy SSID IE with a Wildcard SSID, which appears the same as a null SSID, in the Probe Request. Such an example is shown in event 1010 of Figure 10. The legacy SSID IE is included here to avoid otherwise possible erroneous behavior of an implementation of a legacy AP if it sees a Probe Request frame without an SSID IE at all. But, this Probe Request frame, appearing as a Wildcard Probe Request to legacy APs, may cause legacy APs nearby to respond, as shown in Step 2 in FIG. 7. However, at least they don't misbehave from a protocol standpoint.

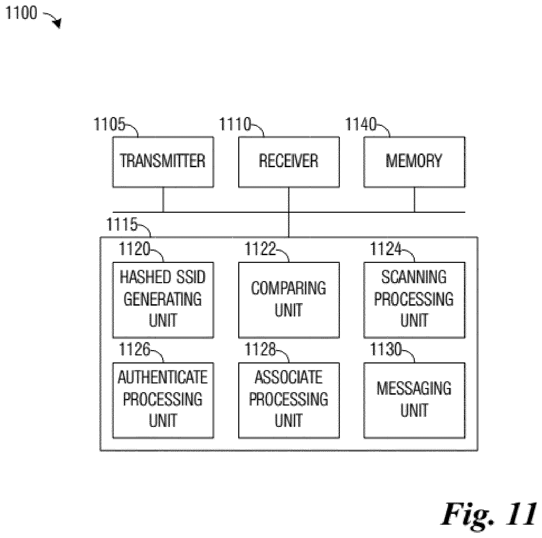

Figure 11 illustrates an example communications device 1100. Communications device 1100 may be an implementation of a hashed SSID compliant communications device, such as a communications controller, such as an access point, an eNB, a base station, a NodeB, a controller, and the like, or a device, such as a station, a UE, a user, a subscriber, a terminal, a mobile, a mobile station, and the like. Communications device 1100 may be used to implement various ones of the embodiments discussed herein. As shown in Figure 11, a transmitter 1105 is configured to transmit data frames, control frames including hashed SSIDs, and the like. Communications device 1100 also includes a receiver 1110 that is configured to receive data frames, control frames including hashed SSIDs, and the like.

A hashed SSID generating unit 1120 is configured to generate a hashed SSID (or a truncated hashed SSID) from a SSID. Hashed SSID generating unit 1120 is configured to use a hashing function, such as SHA-256. Hashed SSID generating unit 1120 is configured to modify the SSID using a value, such as a timestamp, a frame type, a frame sequence number, a Nonce, a MAC address, and the like, prior to hashing. Hashed SSID generating unit 1120 is configured to combine, e.g., combine, add, and the like, the value with the SSID. Hashed SSID generating unit 1120 is configured to truncate the hashed SSID to produce truncated hashed SSIDs. A comparing unit 1122 is configured to compare two hashed SSIDs (or truncated hashed SSIDs) and indicate if the two hashed SSIDs are or are not equal. A scanning processing unit 1124 is configured to generate messaging used in a scanning procedure. Scanning processing unit 1124 is configured to generate Beacon frames, Probe Request frames, and/or Probe Response frames. Scanning processing unit 1124 is configured to process messaging used in a scanning procedure. Scanning processing unit 1124 is configured to process Beacon frames, Probe Request frames, and/or Probe Response frames.

An authenticate processing unit 1126 is configured to generate messaging used in an authentication procedure. Authenticate processing unit 1126 is configured to generate Authentication Request frames and/or Authentication Response frames. Authenticate processing unit 1126 is configured to process Authentication Request frames and/or Authentication Response frames. An associate processing unit 1128 is configured to generate messaging used in an association procedure. Associate processing unit 1128 is configured to generate Association Request frames and/or Association Response frames. Associate processing unit 1128 is configured to process Association Request frames and/or Association Response frames. A messaging unit 1130 is configured to generate frames. Messaging unit 1130 is configured to generate frames with a hashed SSID IE containing a hashed SSID. Messaging unit 1130 is configured to generate frames with a legacy SSID IE containing a hashed SSID or containing a hashed SSID and a pre-defined value that indicates the legacy SSID IE actually contains a hashed SSID. A memory 1140 is configured to store SSIDs, preferred WLAN lists, hashed SSIDs, values for modifying SSIDs (e.g., timestamps, frame types, frame sequence numbers, Nonces), data frames, control frames, and the like.

The elements of communications device 1100 may be implemented as specific hardware logic blocks. In an alternative, the elements of communications device 1100 may be implemented as software executing in a processor, controller, application specific integrated circuit, or so on. In yet another alternative, the elements of communications device 1100 may be implemented as a combination of software and/or hardware.

As an example, receiver 1110 and transmitter 1105 may be implemented as a specific hardware block, while hashed SSID generating unit 1120, comparing unit 1122, scanning processing unit 1124, authenticate processing unit 1126, associate processing unit 1128, and messaging unit 1130 may be software modules executing in a microprocessor (such as processor 1115) or a custom circuit or a custom compiled logic array of a field programmable logic array. Hashed SSID generating unit 1120, comparing unit 1122, scanning processing unit 1124, authenticate processing unit 1126, associate processing unit 1128, and messaging unit 1130 may be modules stored in memory 1140.

Aspects of this disclosure provide the following benefits: Protecting SSID privacy; Protecting user privacy (such as location, interests, etc.); Making it more costly for an attacker to impersonate a legitimate AP or STA; Maintaining backward compatibility such that legacy STAs or legacy APs don't misbehave when a Hashed SSID is used; and the like. Aspects of this disclosure may be effectuated without significantly departing from existing telecom standards. Although the present disclosure and its advantages have been described in detail, it should be understood that various changes, substitutions and alterations can be made herein without departing from the scope of the disclosure as defined by the appended claims.

## Claims

1. A method for securing communications between an access point (105) and a station (110-116), the method comprising:
generating (905), by the station (110-116), a first truncated hashed service set identifier, SSID, by applying a first hash function to a first SSID known by the station (110-116), wherein the first SSID is modified by the station with a value;
transmitting (907), by the station (110-116), a first message to the access point, wherein the first message includes the first truncated hashed SSID and the value used to modify the SSID;
receiving (909), by the station (110-116), a second message from the access point, wherein the second message includes a second truncated hashed SSID generated by the access point (105) by applying a second hash function to a second SSID associated with the access point and a second value, wherein the second SSID is modified by the AP with the second value;
generating (911), by the station (110-116), a third truncated hashed SSID by applying the second hash function to the first SSID, wherein the first SSID is modified by the station (110-116) with the second value;
determining (913), by the station (110-116), if the third truncated hashed SSID matches the second truncated hashed SSID;
transmitting (917), by the station (110-116), a third message to the access point (105) if the third truncated hashed SSID matches the second truncated hashed SSID, wherein the third message is representative for an Authentication Request frame;
receiving (919), by the station (110-116), a fourth message from the access point (105), wherein the fourth message is representative for an Authentication Response frame;
generating (921), by the station (110-116), a fourth truncated hashed SSID, by applying a hash function to the first SSID wherein the first SSID is modified by the station with a third value;
transmitting (923), by the station (110-116), a fifth message to the access point (105), wherein the fifth message includes the fourth truncated hashed SSID and the third value used to modify the SSID and wherein the fifth message is representative for an Association Request frame;
receiving, by the station (110-116), a sixth message from the access point (105), wherein the sixth message is representative for an Association Response frame.

2. The method of claim 1, wherein generating the first truncated hashed SSID comprises:
obtaining a first value comprising one or more of a time stamp, a value associated with a frame type of a frame that carries the first message, a nonce, a sequence number, and a medium access control, MAC, address;
modifying the first SSID with the first value to obtain a first modified SSID to be used as an input to the first hash function;
generating a first hash output by applying the first hash function to the first modified SSID; and
truncating the first hash output with a first truncation function to produce the first truncated hashed SSID.

3. The method of claim 1, wherein generating the third truncated hashed SSID comprises:
retrieving a second value from the second message, the second value comprising one or more of a time stamp, a value associated with a frame type of a frame that carries the second message, a nonce, a sequence number, and a MAC address;
modifying the first SSID with the second value to obtain a second modified SSID to be used as an input to the second hash function;
generating a second hash output by applying the second hash function to the second modified SSID; and
truncating the second hash output with a second truncation function to produce the third truncated hashed SSID.

4. The method of claim 1, wherein the first message is a Probe Request frame, the second message is a Probe Response frame.

5. The method of claim 1, wherein the first message includes a hashed SSID Information Element, IE, containing the first hashed SSID in a hashed SSID field or wherein the first message includes a legacy SSID IE including a SSID field comprising the first hashed SSID and a Length field set to a first pre-specified value indicating that the SSID field comprises the first truncated hashed SSID.

6. The method of claim 5, wherein the SSID field further includes a second pre-specified value in a first portion of the SSID field, the second pre-specified value being one of a specified text string, a specified value, and a specified sequence, wherein the second pre-specified value indicates that the SSID field includes the first truncated hashed SSID in a second portion of the SSID field, and wherein the first pre-specified value equal to a sum of a length of the first truncated hashed SSID and a length of the second pre-specified value.

7. The method of claim 1, wherein the first hash function and the second hash function are equal.

8. A method for securing communications between an access point (105) and a station (110-116), the method comprising:
receiving (955), by the access point (105), a first message from the station (110-116), wherein the message includes a first truncated hashed service set identifier, SSID, and a value used to modify the SSID, wherein the first truncated hashed SSID is generated by the station (110-116) by applying a first hash function to a first SSID known by the station (110-116), wherein the first SSID is modified by the station (110-116) with the value,
generating (957), by the access point (105), a second hashed SSID by applying a second hash function to a second SSID associated with the access point, wherein the second SSID is modified by the access point (105) with the value;
determining (959), by the access point (110-116), if the first truncated hashed SSID matches the second truncated hashed SSID,
generating (961), by the access point (105), a third truncated hashed SSID by applying the second hash function to the second SSID, wherein the second SSID is modified by the access point (105) with a second value; transmitting (963), by the access point (105), a second message to the station (110-116), wherein the second message includes the third truncated hashed SSID and the second value;
receiving (965), by the access point (105), a third message from the station (110-116), wherein the third message is representative for an Authentication Request frame;
transmitting (967), by the access point (105), a fourth message to the station (110-116), wherein the fourth message is representative for an Authentication Response frame;
receiving (969), by the access point (105), a fifth message from the station (110-116), wherein the fifth message includes a fourth truncated hashed SSID and a third value used to modify the SSID, wherein the fourth truncated hashed SSID is generated by the station (110-116) by applying a hash function to the first SSID wherein the first SSID is modified by the station with a third value and wherein the fifth message is representative for an Association Request frame,
generating (971), by the access point (105), a fifth truncated hashed SSID by applying a hash function to the second SSID, wherein the second SSID is modified by the access point (105) with the third value,
determining (973), by the access point (110-116), if the fourth truncated hashed SSID matches the fifth truncated hashed SSID,
transmitting, by the access point (110-116), to the station (110-116) a sixth message, wherein the sixth message is representative for an Association Response frame.

9. The method of claim 8, wherein generating the second truncated hashed SSID comprises:
obtaining the value comprising one or more of a time stamp, a value associated with a frame type of the Beacon frame, a nonce, a sequence number, and a medium access control, MAC, address;
modifying the second SSID with the value to obtain a second modified SSID to be used as an input to the second hash function;
generating a first hash output by applying the second hash function to the second modified SSID; and
truncating the first hash output with a first truncation function to produce the second hashed SSID.

10. The method of claim 8 or 9, wherein generating the fifth truncated hashed SSID comprises:
retrieving the third value from the fifth message, the third value comprising one or more of a time stamp, a value associated with a frame type of a frame that carries the third message, a nonce, a sequence number, and a MAC address;
modifying the second SSID with the third value to obtain a second modified SSID to be used as an input to the second hash function;
generating a second hash output by applying the second hash function to the second modified SSID; and
truncating the second hash output with a second truncation function to produce the fifth truncated hashed SSID.

11. A station (110-116) comprising:
a processor, a transmitter and a receiver, wherein the station (110-116) is configured to execute the method of one of the claims 1 to 7.

12. An access point (105) comprising:
a processor, a transmitter and a receiver, wherein the access point (105) is configured to execute the method of one of the claims 8 to 10.

13. A communications system comprising:
an access point (105) configured to serve stations operating within a coverage area; and
a station (110-116) operatively coupled to the access point (105), wherein the station (110-116) is the station (110-116) according to claim 11 and the access point (105) is the access point according to claim 12.

## Patentansprüche

1. Verfahren zum Sichern von Kommunikationen zwischen einem Zugangspunkt (105) und einer Station (110-116), wobei das Verfahren Folgendes umfasst:
Erzeugen (905) durch die Station (110-116) einer ersten gekürzten, mit einer Prüfsumme versehenen Dienstgruppenkennung, SSID, durch Anwenden einer ersten Prüfsummenfunktion auf eine erste SSID, die der Station (110-116) bekannt ist, wobei die erste SSID durch die Station mit einem Wert geändert wird;
Senden (907) durch die Station (110-116) einer ersten Nachricht zum Zugangspunkt, wobei die erste Nachricht die erste gekürzte, mit einer Prüfsumme versehene SSID und den Wert, der verwendet wird, die SSID zu ändern, enthält;
Empfangen (909) durch die Station (110-116) einer zweiten Nachricht vom Zugangspunkt, wobei die zweite Nachricht eine zweite gekürzte, mit einer Prüfsumme versehene SSID, die durch den Zugangspunkt (105) durch Anwenden einer zweiten Prüfsummenfunktion auf eine zweite SSID, die dem Zugangspunkt zugeordnet ist, und einen zweiten Wert erzeugt wird, enthält, wobei die zweite SSID durch den AP mit dem zweiten Wert geändert wird;
Erzeugen (911) durch die Station (110-116) einer dritten gekürzten, mit einer Prüfsumme versehenen SSID durch Anwenden der zweiten Prüfsummenfunktion auf die erste SSID, wobei die erste SSID durch die Station (110-116) mit dem zweiten Wert geändert wird;
Bestimmen (913) durch die Station (110-116), ob die dritte gekürzte, mit einer Prüfsumme versehene SSID mit der zweiten gekürzten, mit einer Prüfsumme versehenen SSID übereinstimmt;
Senden (917) durch die Station (110-116) einer dritten Nachricht zum Zugangspunkt (105), wenn die dritte gekürzte, mit einer Prüfsumme versehene SSID mit der zweiten gekürzten, mit einer Prüfsumme versehenen SSID übereinstimmt, wobei die dritte Nachricht für einen Authentifizierungsanforderungsrahmen repräsentativ ist;
Empfangen (919) durch die Station (110-116) einer vierten Nachricht vom Zugangspunkt (105), wobei die vierte Nachricht für einen Authentifizierungsanforderungsrahmen repräsentativ ist;
Erzeugen (921) durch die Station (110-116) einer vierten gekürzten, mit einer Prüfsumme versehenen SSID durch Anwenden einer Prüfsummenfunktion auf die erste SSID, wobei die erste SSID durch die Station mit einem dritten Wert geändert wird;
Senden (923) durch die Station (110-116) einer fünften Nachricht zum Zugangspunkt (105), wobei die fünfte Nachricht die vierte gekürzte, mit einer Prüfsumme versehene SSID und den dritten Wert, der verwendet wird, um die SSID zu ändern, enthält und die fünfte Nachricht für einen Authentifizierungsanforderungsrahmen repräsentativ ist;
Empfangen durch die Station (110-116) einer sechsten Nachricht vom Zugangspunkt (105), wobei die sechste Nachricht für einen Authentifizierungsanforderungsrahmen repräsentativ ist.

2. Verfahren nach Anspruch 1, wobei das Erzeugen der ersten gekürzten, mit einer Prüfsumme versehenen SSID Folgendes umfasst:
Erhalten eines ersten Wertes, der einen Zeitstempel, einen Wert, der einem Rahmentyp eines Rahmens, der die erste Nachricht führt, zugeordnet ist, eine Zufallszahl, eine Folgenummer und/oder eine Medienzugriffsteueradresse, MAC-Adresse, umfasst;
Ändern der ersten SSID mit dem ersten Wert, um eine erste geänderte SSID, die als eine Eingabe in die erste Prüfsummenfunktion verwendet werden soll, zu erhalten;
Erzeugen einer ersten Prüfsummenausgabe durch Anwenden der ersten Prüfsummenfunktion auf die erste geänderte SSID; und
Kürzen der ersten Prüfsummenausgabe mit einer ersten Kürzungsfunktion, um die erste gekürzte, mit einer Prüfsumme versehene SSID zu erstellen.

3. Verfahren nach Anspruch 1, wobei das Erzeugen der dritten gekürzten, mit einer Prüfsumme versehenen SSID Folgendes umfasst:
Entnehmen eines zweiten Wertes aus der zweiten Nachricht, wobei der zweite Wert einen Zeitstempel, einen Wert, der einem Rahmentyp eines Rahmens, der die zweite Nachricht führt, zugeordnet ist, eine Zufallszahl, eine Folgenummer und/oder eine MAC-Adresse umfasst;
Ändern der ersten SSID mit dem zweiten Wert um eine zweite geänderte SSID, die als eine Eingabe in die zweite Prüfsummenfunktion verwendet werden soll, zu erhalten;
Erzeugen einer zweiten Prüfsummenausgabe durch Anwenden der zweiten Prüfsummenfunktion auf die zweite geänderte SSID; und
Kürzen der zweiten Prüfsummenausgabe mit einer zweiten Kürzungsfunktion, um die dritte gekürzte, mit einer Prüfsumme versehene SSID zu erstellen.

4. Verfahren nach Anspruch 1, wobei die erste Nachricht ein Sondierungsanforderungsrahmen ist und die zweite Nachricht ein Sondierungsanforderungsrahmen ist.

5. Verfahren nach Anspruch 1, wobei die erste Nachricht ein mit einer Prüfsumme versehenes SSID-Informationselement, SSID-IE, enthält, das die erste mit einer Prüfsumme versehene SSID in einem Feld für eine mit einer Prüfsumme versehene SSID enthält, oder
die erste Nachricht ein Alt-SSID-IE enthält, das ein SSID-Feld enthält, das die erste mit einer Prüfsumme versehene SSID und ein Längenfeld, das auf einen ersten vordefinierten Wert, der anzeigt, dass das SSID-Feld die erste mit einer Prüfsumme versehene SSID umfasst, gesetzt wird, umfasst.

6. Verfahren nach Anspruch 5, wobei das SSID-Feld ferner einen zweiten vordefinierten Wert in einem ersten Abschnitt des SSID-Feldes umfasst, wobei der zweite vordefinierte Wert eine bestimmte Textzeichenfolge, ein bestimmter Wert oder eine bestimmte Folge ist, der zweite vordefinierte Wert anzeigt, dass das SSID-Feld die erste gekürzte, mit einer Prüfsumme versehene SSID in einem zweiten Abschnitt des SSID-Feldes enthält, und der erste vordefinierte Wert gleich einer Summe einer Länge der ersten gekürzten, mit einer Prüfsumme versehenen SSID und einer Länge des zweiten vordefinierten Wertes ist.

7. Verfahren nach Anspruch 1, wobei die erste Prüfsummenfunktion und die zweite Prüfsummenfunktion gleich sind.

8. Verfahren zum Sichern von Kommunikationen zwischen einem Zugangspunkt (105) und einer Station (110-116), wobei das Verfahren Folgendes umfasst:
Empfangen (955) durch den Zugangspunkt (105) einer ersten Nachricht von der Station (110-116), wobei die Nachricht eine erste gekürzte, mit einer Prüfsumme versehene Dienstgruppenkennung, SSID, und einen Wert, der verwendet wird, um die SSID zu ändern, enthält, wobei die erste gekürzte, mit einer Prüfsumme versehene SSID durch die Station (110-116) erzeugt wird, indem eine erste Prüfsummenfunktion auf eine erste SSID, die der Station (110-116) bekannt ist, angewendet wird, wobei die erste SSID durch die Station (110-116) mit dem Wert geändert wird;
Erzeugen (957) durch den Zugangspunkt (105) einer zweiten mit einer Prüfsumme versehenen SSID durch Anwenden einer zweiten Prüfsummenfunktion auf eine zweite SSID, die dem Zugangspunkt zugeordnet ist, wobei die zweite SSID durch den Zugangspunkt (105) mit dem Wert geändert wird;
Bestimmen (959) durch den Zugangspunkt (110-116), ob die erste gekürzte, mit einer Prüfsumme versehene SSID mit der zweiten gekürzten, mit einer Prüfsumme versehenen SSID übereinstimmt;
Erzeugen (961) durch den Zugangspunkt (105) einer dritten gekürzten, mit einer Prüfsumme versehenen SSID durch Anwenden der zweiten Prüfsummenfunktion auf die zweite SSID, wobei die zweite SSID durch den Zugangspunkt (105) mit einem zweiten Wert geändert wird; Senden (963) durch den Zugangspunkt (105) einer zweiten Nachricht zur Station (110-116), wobei die zweite Nachricht die dritte gekürzte, mit einer Prüfsumme versehene SSID und den zweiten Wert enthält;
Empfangen (965) durch den Zugangspunkt (105) einer dritten Nachricht von der Station (110-116), wobei die dritte Nachricht für einen Authentifizierungsanforderungsrahmen repräsentativ ist;
Senden (967) durch den Zugangspunkt (105) einer vierten Nachricht zur Station (110-116), wobei die vierte Nachricht für einen Authentifizierungsanforderungsrahmen repräsentativ ist;
Empfangen (969) durch den Zugangspunkt (105) einer fünften Nachricht von der Station (110-116), wobei die fünfte Nachricht eine vierte gekürzte, mit einer Prüfsumme versehene SSID und einen dritten Wert, der verwendet wird, um die SSID zu ändern, enthält, wobei die vierte gekürzte, mit einer Prüfsumme versehene SSID durch die Station (110-116) durch Anwenden einer Prüfsummenfunktion auf die erste SSID erzeugt wird, wobei die erste SSID durch die Station mit einem dritten Wert geändert ist und die fünfte Nachricht für einen Authentifizierungsanforderungsrahmen repräsentativ ist,
Erzeugen (971) durch den Zugangspunkt (105) einer fünften gekürzten, mit einer Prüfsumme versehenen SSID durch Anwenden einer Prüfsummenfunktion auf die zweite SSID, wobei auf die zweite SSID durch den Zugangspunkt (105) mit dem dritten Wert geändert ist,
Bestimmen (973) durch den Zugangspunkt (110-116), ob die vierte gekürzte, mit einer Prüfsumme versehene SSID mit der fünften gekürzten, mit einer Prüfsumme versehenen SSID übereinstimmt;
Senden durch den Zugangspunkt (110-116) zur Station (110-116) einer sechsten Nachricht, wobei die sechste Nachricht für einen Authentifizierungsanforderungsrahmen repräsentativ ist.

9. Verfahren nach Anspruch 8, wobei das Erzeugen der zweiten gekürzten, mit einer Prüfsumme versehenen SSID Folgendes umfasst:
Erhalten des ersten Wertes, der einen Zeitstempel, einen Wert, der einem Rahmentyp des Bakenrahmens zugeordnet ist, eine Zufallszahl, eine Folgenummer und/oder eine Medienzugriffsteueradresse, MAC-Adresse, umfasst;
Ändern der zweiten SSID mit dem ersten Wert, um eine zweite geänderte SSID, die als eine Eingabe in die zweite Prüfsummenfunktion verwendet werden soll, zu erhalten;
Erzeugen einer ersten Prüfsummenausgabe durch Anwenden der zweiten Prüfsummenfunktion auf die zweite geänderte SSID; und
Kürzen der ersten Prüfsummenausgabe mit einer ersten Kürzungsfunktion, um die zweite gekürzte, mit einer Prüfsumme versehene SSID zu erstellen.

10. Verfahren nach Anspruch 8 oder 9, wobei das Erzeugen der fünften gekürzten, mit einer Prüfsumme versehenen SSID Folgendes umfasst:
Entnehmen des dritten Wertes aus der fünften Nachricht, wobei der dritte Wert einen Zeitstempel, einen Wert, der einem Rahmentyp eines Rahmens, der die dritte Nachricht führt, zugeordnet ist, eine Zufallszahl, eine Folgenummer und/oder eine MAC-Adresse umfasst;
Ändern der zweiten SSID mit dem dritten Wert um eine zweite geänderte SSID, die als eine Eingabe in die zweite Prüfsummenfunktion verwendet werden soll, zu erhalten;
Erzeugen einer zweiten Prüfsummenausgabe durch Anwenden der zweiten Prüfsummenfunktion auf die zweite geänderte SSID; und
Kürzen der zweiten Prüfsummenausgabe mit einer zweiten Kürzungsfunktion, um die fünfte gekürzte, mit einer Prüfsumme versehene SSID zu erstellen.

11. Station (110-116), die Folgendes umfasst:
einen Prozessor, einen Sender und einen Empfänger, wobei die Station (110-116) konfiguriert ist, das Verfahren nach einem der Ansprüche 1 bis 7 auszuführen.

12. Zugangspunkt (105), der Folgendes umfasst:
einen Prozessor, einen Sender und einen Empfänger, wobei der Zugangspunkt (105) konfiguriert ist, das Verfahren nach einem der Ansprüche 8 bis 10 auszuführen.

13. Kommunikationssystem, das Folgendes umfasst:
einen Zugangspunkt (105), der konfiguriert ist, Stationen zu bedienen, die in einem Abdeckungsbereich arbeiten; und
eine Station (110-116), die mit dem Zugangspunkt (105) funktionstechnisch gekoppelt ist, wobei die Station (110-116) die Station (110-116) nach Anspruch 11 ist und der Zugangspunkt (105) der Zugangspunkt nach Anspruch 12 ist.

## Revendications

1. Procédé de sécurisation de communications entre un point d'accès (105) et une station (110-116), le procédé comprenant les étapes consistant à :
générer (905), par la station (110-116), un premier identifiant d'ensemble de services, SSID (service set identifier), haché tronqué en appliquant une première fonction de hachage à un premier SSID connu de la station (110-116), dans lequel le premier SSID est modifié par la station avec une valeur ;
transmettre (907), par la station (110-116), un premier message au point d'accès, dans lequel le premier message comprend le premier SSID haché tronqué et la valeur utilisée pour modifier le SSID ;
recevoir (909), par la station (110-116), un deuxième message provenant du point d'accès, dans lequel le deuxième message comprend un deuxième SSID haché tronqué généré par le point d'accès (105) en appliquant une seconde fonction de hachage à un deuxième SSID associé au point d'accès et une deuxième valeur, dans lequel le deuxième SSID est modifié par le point d'accès avec la deuxième valeur ;
générer (911), par la station (110-116), un troisième SSID haché tronqué en appliquant la seconde fonction de hachage au premier SSID, dans lequel le premier SSID est modifié par la station (110-116) avec la deuxième valeur ;
déterminer (913), par la station (110-116), si le troisième SSID haché tronqué correspond au deuxième SSID haché tronqué ;
transmettre (917), par la station (110-116), un troisième message au point d'accès (105) si le troisième SSID haché tronqué correspond au deuxième SSID haché tronqué, dans lequel le troisième message est représentatif d'une trame de demande d'authentification ;
recevoir (919), par la station (110-116), un quatrième message provenant du point d'accès (105), dans lequel le quatrième message est représentatif d'une trame de réponse d'authentification ;
générer (921), par la station (110-116), un quatrième SSID haché tronqué en appliquant une fonction de hachage au premier SSID, dans lequel le premier SSID est modifié par la station avec une troisième valeur ;
transmettre (923), par la station (110-116), un cinquième message au point d'accès (105), dans lequel le cinquième message comprend le quatrième SSID haché tronqué et la troisième valeur utilisée pour modifier le SSID et dans lequel le cinquième message est représentatif d'une trame de demande d'association ;
recevoir, par la station (110-116), un sixième message provenant du point d'accès (105), dans lequel le sixième message est représentatif d'une trame de réponse d'association.

2. Procédé selon la revendication 1, dans lequel la génération du premier SSID haché tronqué comprend les étapes consistant à :
obtenir une première valeur comprenant un ou plusieurs éléments parmi un horodatage, une valeur associée à un type de trame d'une trame contenant le premier message, un nonce, un numéro de séquence et une adresse de contrôle d'accès au support, MAC (médium access control) ;
modifier le premier SSID avec la première valeur pour obtenir un premier SSID modifié à utiliser comme entrée de la première fonction de hachage ;
générer une première sortie de hachage en appliquant la première fonction de hachage au premier SSID modifié ; et
tronquer la première sortie de hachage avec une première fonction de troncature pour produire le premier SSID haché tronqué.

3. Procédé selon la revendication 1, dans lequel la génération du troisième SSID haché tronqué comprend les étapes consistant à :
récupérer une deuxième valeur du deuxième message, la deuxième valeur comprenant un ou plusieurs éléments parmi un horodatage, une valeur associée à un type de trame d'une trame contenant le deuxième message, un nonce, un numéro de séquence et une adresse MAC ;
modifier le premier SSID avec la deuxième valeur pour obtenir un second SSID modifié à utiliser comme entrée de la seconde fonction de hachage ;
générer une seconde sortie de hachage en appliquant la seconde fonction de hachage au second SSID modifié ; et
tronquer la seconde sortie de hachage avec une seconde fonction de troncature pour produire le troisième SSID haché tronqué.

4. Procédé selon la revendication 1, dans lequel le premier message est une trame de demande de sondage, le deuxième message est une trame de réponse de sondage.

5. Procédé selon la revendication 1, dans lequel le premier message comprend un élément d'information, IE (Information Element), SSID haché contenant le premier SSID haché dans un champ SSID haché ou
dans lequel le premier message comprend un IE SSID hérité comprenant un champ SSID contenant le premier SSID haché et un champ Longueur défini sur une première valeur pré-spécifiée indiquant que le champ SSID comprend le premier SSID haché tronqué.

6. Procédé selon la revendication 5, dans lequel le champ SSID comprend en outre une seconde valeur pré-spécifiée dans une première partie du champ SSID, la seconde valeur pré-spécifiée étant l'une parmi une chaîne de texte spécifiée, une valeur spécifiée et une séquence spécifiée, dans lequel la seconde valeur pré-spécifiée indique que le champ SSID comprend le premier SSID haché tronqué dans une seconde partie du champ SSID, et dans lequel la première valeur pré-spécifiée est égale à une somme d'une longueur du premier SSID haché tronqué et d'une longueur de la seconde valeur pré-spécifiée.

7. Procédé selon la revendication 1, dans lequel la première fonction de hachage et la seconde fonction de hachage sont égales.

8. Procédé de sécurisation de communications entre un point d'accès (105) et une station (110-116), le procédé comprenant les étapes consistant à :
recevoir (955), par le point d'accès (105), un premier message provenant de la station (110-116), dans lequel le message comprend un premier identifiant d'ensemble de service, SSID, haché tronqué et une valeur utilisée pour modifier le SSID, dans lequel le premier SSID haché tronqué est généré par la station (110-116) en appliquant une première fonction de hachage à un premier SSID connu de la station (110-116), dans lequel le premier SSID est modifié par la station (110-116) avec la valeur,
générer (957), par le point d'accès (105), un deuxième SSID haché en appliquant une seconde fonction de hachage à un deuxième SSID associé au point d'accès, dans lequel le deuxième SSID est modifié par le point d'accès (105) avec la valeur ;
déterminer (959), par le point d'accès (110-116), si le premier SSID haché tronqué correspond au deuxième SSID haché tronqué,
générer (961), par le point d'accès (105), un troisième SSID haché tronqué en appliquant la seconde fonction de hachage au deuxième SSID, dans lequel le deuxième SSID est modifié par le point d'accès (105) avec une deuxième valeur ;
transmettre (963), par le point d'accès (105), un deuxième message à la station (110-116), dans lequel le deuxième message comprend le troisième SSID haché tronqué et la deuxième valeur ;
recevoir (965), par le point d'accès (105), un troisième message provenant de la station (110-116), dans lequel le troisième message est représentatif d'une trame de demande d'authentification ;
transmettre (967), par le point d'accès (105), un quatrième message à la station (110-116), dans lequel le quatrième message est représentatif d'une trame de réponse d'authentification ;
recevoir (969), par le point d'accès (105), un cinquième message provenant de la station (110-116), dans lequel le cinquième message comprend un quatrième SSID haché tronqué et une troisième valeur utilisée pour modifier le SSID, dans lequel le quatrième SSID haché tronqué est généré par la station (110-116) en appliquant une fonction de hachage au premier SSID dans lequel le premier SSID est modifié par la station avec une troisième valeur et dans lequel le cinquième message est représentatif d'une trame de demande d'association,
générer (971), par le point d'accès (105), un cinquième SSID haché tronqué en appliquant une fonction de hachage au deuxième SSID, dans lequel le deuxième SSID est modifié par le point d'accès (105) avec la troisième valeur,
déterminer (973), par le point d'accès (110-116), si le quatrième SSID haché tronqué correspond au cinquième SSID haché tronqué,
transmettre, par le point d'accès (110-116), à la station (110-116) un sixième message, dans lequel le sixième message est représentatif d'une trame de réponse d'association.

9. Procédé selon la revendication 8, dans lequel la génération du deuxième SSID haché tronqué comprend les étapes consistant à :
obtenir la valeur comprenant un ou plusieurs éléments parmi un horodatage, une valeur associée à un type de trame de la trame de balise, un nonce, un numéro de séquence et une adresse de contrôle d'accès au support, MAC ;
modifier le deuxième SSID avec la valeur pour obtenir un second SSID modifié à utiliser comme entrée de la seconde fonction de hachage ;
générer une première sortie de hachage en appliquant la seconde fonction de hachage au second SSID modifié ; et
tronquer la première sortie de hachage avec une première fonction de troncature pour produire le deuxième SSID haché.

10. Procédé selon la revendication 8 ou 9, dans lequel la génération du cinquième SSID haché tronqué comprend les étapes consistant à :
récupérer la troisième valeur du cinquième message, la troisième valeur comprenant un ou plusieurs éléments parmi un horodatage, une valeur associée à un type de trame d'une trame contenant le troisième message, un nonce, un numéro de séquence et une adresse MAC ;
modifier le deuxième SSID avec la troisième valeur pour obtenir un second SSID modifié à utiliser comme entrée de la seconde fonction de hachage ;
générer une seconde sortie de hachage en appliquant la seconde fonction de hachage au second SSID modifié ; et
tronquer la seconde sortie de hachage avec une seconde fonction de troncature pour produire le cinquième SSID haché tronqué.

11. Station (110-116) comprenant :
un processeur, un émetteur et un récepteur, la station (110-116) étant configurée pour exécuter le procédé selon l'une des revendications 1 à 7.

12. Point d'accès (105) comprenant :
un processeur, un émetteur et un récepteur, le point d'accès (105) étant configuré pour exécuter le procédé selon l'une des revendications 8 à 10.

13. Système de communications comprenant :
un point d'accès (105) configuré pour desservir des stations opérant dans une zone de couverture ; et
une station (110-116) couplée de manière opérationnelle au point d'accès (105), dans lequel la station (110-116) est la station (110-116) selon la revendication 11 et le point d'accès (105) est le point d'accès selon la revendication 12.
